(19) Europäisches Patentamt
European Patent Office
Office européen des brevets

(11) Veröffentlichungsnummer: **0 322 708 B1**

# (12) EUROPÄISCHE PATENTSCHRIFT

(45) Veröffentlichungstag der Patentschrift: **28.04.93**

(51) Int. Cl.[5]: **C08F 20/34**, C08F 20/38, C08F 20/60, G11B 7/24, B01D 61/00, B01D 53/22, C07C 69/54, B01J 20/26

(21) Anmeldenummer: **88121282.3**

(22) Anmeldetag: **20.12.88**

## (54) Amid-Seitenkettenpolymere.

(30) Priorität: **29.12.87 CH 5098/87**
**21.10.88 CH 3920/88**

(43) Veröffentlichungstag der Anmeldung:
**05.07.89 Patentblatt 89/27**

(45) Bekanntmachung des Hinweises auf die Patenterteilung:
**28.04.93 Patentblatt 93/17**

(84) Benannte Vertragsstaaten:
**CH DE FR GB IT LI NL**

(56) Entgegenhaltungen:
**DE-A- 1 720 626**
**DE-A- 1 929 554**
**DE-A- 2 825 883**
**FR-A- 2 585 024**

(73) Patentinhaber: **F. HOFFMANN-LA ROCHE AG**
**Postfach 3255**
**CH-4002 Basel(CH)**

(72) Erfinder: **Lorenz, Reinhard, Dr.**
**Herb.-Hellmann-Allee 21A**
**W-7812 Bad Krozingen(DE)**

(74) Vertreter: **Cottong, Norbert A. et al**
**Grenzacherstrasse 124 Postfach 3255**
**CH-4002 Basel (CH)**

**EP 0 322 708 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Seitenkettenpolymere mit einer Amidgruppe in der Seitenkette, deren Herstellung, die entsprechenden Monomere, Gemische der Polymere untereinander und/oder mit andern Materialien und die Verwendung der Polymere und Gemische in der Optik, insbesondere in der integrierten Optik, in der Optoelektronik und/oder zur Informationsspeicherung, oder zur Trennung von Stoffgemischen, insbesondere für Trennmembranen zur Trennung von Gasgemischen oder als stationäre Phase in der Gaschromatographie.

Die anisotropen Eigenschaften von Flüssigkristallen lassen sich vor allem in der Optoelektronik technisch ausnutzen. Besondere Bedeutung haben dabei die elektro-optischen Anzeigevorrichtungen auf der Basis von niedermolekularen Flüssigkristallmaterialien erlangt. Hierbei dient der Flüssigkristall als Lichtmodulator, wobei im allgemeinen das optische Verhalten der Flüssigkristallschicht durch ein angelegtes elektrisches Feld beeinflusst wird. Die bisherigen Arbeiten über Flüssigkristalle betrafen daher hauptsächlich Materialien mit niederem Molekulargewicht im Hinblick auf deren Anwendbarkeit in Anzeigevorrichtungen.

In letzter Zeit wurden jedoch auch Polymere untersucht, welche sogenannte "mesogene" Gruppen in der Polymerhauptkette (Hauptkettenpolymere) oder seitenkettenartig an die Polymerhauptkette gebunden (Seitenkettenpolymere) aufweisen. Als mesogen werden im allgemeinen Gruppen bezeichnet, die eine ausgeprägte Form-Anisotropie und insbesondere eine stäbchen- oder scheibenförmige Struktur besitzen, da die entsprechenden niedermolekularen Verbindungen oft flüssigkristalline Eigenschaften aufweisen [Angew. Chemie 99, 840 (1987)]. Hauptkettenpolymere können durch parallele Anordnung der mesogenen Gruppen meist Fasern hoher Festigkeit bilden. Demgegenüber kann die seitliche Anordnung der mesogenen Gruppen im Idealfall zu Materialien führen, welche sowohl Eigenschaften von Polymeren als auch von Flüssigkristallen aufweisen.

Flüssigkristall-Seitenkettenpolymere sind als Materialien mit anisotropen Eigenschaften von grossem potentiellem Interesse für verschiedenste Bereiche der Technik. Die anisotropen Eigenschaften können je nach Verarbeitung und Vorbehandlung oft stark modifiziert werden. Beispielsweise können durch Einfrieren der anisotropen Phase anisotrope Gläser oder nach vorheriger makroskopischer Ausrichtung mit elektrischen oder magnetischen Feldern auch Einkristalle erhalten werden. Ferner können z.B. die anisotropen Eigenschaften von Elastomeren auch durch mechanische Deformation beeinflusst werden. Seitenkettenpolymere sind daher besonders für optische Anwendungen von Interesse, z.B. als optische Bauelemente in der linearen und nicht-linearen Optik, als optische Speicherelemente und dergleichen. Anderseits eignen sich flüssigkristalline Seitenkettenpolymere oft als stationäre Phasen in der Gaschromatographie oder insbesondere die Elastomere auch zur Herstellung von Trennmembranen. Die weitere Entwicklung in diesen Bereichen hängt wesentlich von der Verfügbarkeit spezifischer und leistungsfähiger Werkstoffe ab.

Niedermolekulare Verbindungen mit einer Amid-Brückengruppe zwischen zwei Ringen besitzen im allgemeinen relativ hohe Schmelzpunkte. Sie besitzen in der Regel keine oder nur ungenügende Flüssigkristalleigenschaften und wurden bisher wenig verwendet. Die bekannten Hauptkettenpolymere, welche in der monomeren Einheit eine Amid-Brückengruppe zwischen 2 Ringen aufweisen, schmelzen erst bei sehr hohen Temperaturen oder sind gar nicht schmelzbar und daher nur schwierig zu verarbeiten. Aus Makromol. Chemie, Rapid. Commun. 6, 57-63 ist ferner ein Polysiloxan mit einer Amidgruppe in der Seitenkette bekannt, welches aber ebenfalls erst bei sehr hohen Temperaturen unter Zersetzung schmilzt.

Die Erfindung betrifft ein Polymer, welches dadurch gekennzeichnet ist, dass es als monomere Einheit eine Gruppe der allgemeinen Formel

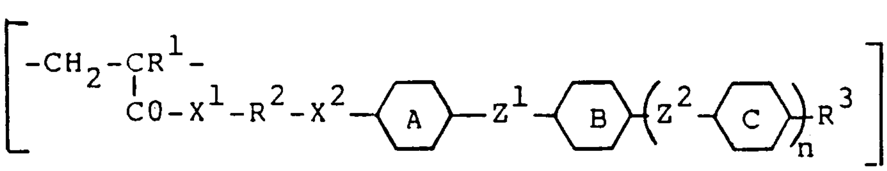

I

worin $R^1$ Wasserstoff, Methyl, Aethyl, Fluor, Chlor, Brom, Cyano oder Phenyl darstellt; $X^1$ Sauerstoff, Schwefel, -NH- oder $-N(CH_3)-$ bezeichnet; $R^2$ Alkylen mit 3-15 Kohlenstoffatomen bedeutet, in welchem gegebenenfalls eine nicht endständige Methylengruppe durch Sauerstoff oder Schwefel ersetzt ist; $X^2$ eine einfache Kovalenzbindung, Sauerstoff oder Schwefel bezeichnet; die Ringe A und B unabhängig voneinander unsubstituiertes oder mit Halogen, Methyl, Methoxy und/oder Cyano substituiertes 1,4-Phenylen darstellen, in welchem gegebenenfalls eine oder zwei CH-Gruppen durch Stickstoff ersetzt sind; Ring C

unsubstituiertes oder mit Halogen, Methyl, Methoxy und/oder Cyano substituiertes 1,4-Phenylen, in welchem gegebenenfalls eine oder zwei CH-Gruppen durch Stickstoff ersetzt sind, oder trans-1,4-Cyclohexylen darstellt; n für die Zahl 0 und $Z^1$ für -CONH- oder -NHCO- stehen; oder n für die Zahl 1 steht, eine der Gruppen $Z^1$ und $Z^2$ -CONH- oder -NHCO- darstellt und die andere der Gruppen $Z^1$ und $Z^2$ eine einfache Kovalenzbindung, $-CH_2CH_2-$, $-CH_2O-$, $-OCH_2-$, -N=N-, -CONH- oder -NHCO- bezeichnet; und $R^3$ Wasserstoff, Halogen, Cyano, Nitro oder eine Alkylgruppe bedeutet, in welcher gegebenenfalls eine oder zwei nicht benachbarte Methylengruppen durch Sauerstoff und/oder Schwefel ersetzt sind,
aufweist.

Die erfindungsgemässen Polymere sind hydrolytisch und thermisch sehr stabil. Sie besitzen im Vergleich zu den vorbekannten Polymeren auf der Basis von "mesogenen" Amid-Gruppen überraschend niedrige Schmelzpunkte und sind daher leicht verarbeitbar. Anderseits zeigen sie meist eine ausgeprägte Tendenz zur Kristallisation und können daher unterhalb des Schmelzpunktes leicht als Polymere mit hoher innerer Ordnung erhalten werden. Die erfindungsgemässen Polymere besitzen ferner relativ hohe Klärpunkte und, wenn sie glasig sind, hohe Glasübergangstemperaturen. Die Kristallisation kann gewünschtenfalls durch Copolymerisation und/oder durch Mischen mit andern Materialien ganz oder teilweise unterdrückt werden. Die erfindungsgemässen Polymere besitzen deshalb einen breiten Anwendungsbereich und eignen sich insbesondere zur Anwendung in Gebieten, in denen Materialien mit anisotropen Eigenschaften benötigt werden. Je nach Wahl der wiederkehrenden monomeren Einheit der Formel I sowie gewünschtenfalls durch Umsetzung mit Comonomeren und/oder Beimischen von andern Materialien können Kristalle, Gläser, Elastomere und/oder flüssigkristalline Phasen mit jeweils grossen thermischen Arbeitsbereichen erhalten werden.

Der obige Ausdruck "nicht endständige Methylengruppe" soll zu $X^1$ oder $X^2$ benachbarte Methylengruppen und Methylgruppen (im Falle von verzweigtem Alkylen $R^2$) ausschliessen, d.h. nicht endständige Methylengruppen sind mit 2 Kohlenstoffatomen verknüpft.

Der Ausdruck "Halogen" umfasst Fluor, Chlor, Brom und Jod.

Der Ausdruck "unsubstituiertes oder mit Halogen, Methyl, Methoxy und/oder Cyano substituiertes 1,4-Phenylen, in welchem gegebenenfalls eine oder zwei CH-Gruppen durch Stickstoff ersetzt sind", umfasst 1,4-Phenylen sowie davon abgeleitete Gruppen mit lateralen Halogen-, Methyl-, Methoxy- und/oder Cyano-Substituenten und/oder mit einem oder zwei Stickstoffatomen im Ring, wie Fluor-1,4-phenylen, Chlor-1,4-phenylen, Methyl-1,4-phenylen, Methoxy-1,4-phenylen, Cyano-1,4-phenylen, 2,3-Difluor-1,4-phenylen, Pyridin-2,5-diyl, Pyrazin-2,5-diyl, Pyrimidin-2,5-diyl, Pyridazin-3,6-diyl.

Der Ausdruck "Alkylgruppe, in welcher gegebenenfalls eine oder zwei nicht benachbarte Methylengruppen durch Sauerstoff und/oder Schwefel ersetzt sind", umfasst geradkettige und verzweigte, gegebenenfalls chirale Gruppen. Beispiele solcher Gruppen sind Alkyl, Alkoxy, Alkylthio, Alkoxyalkyl, Alkylthioalkyl und Alkoxyalkoxy, wie Methyl, Aethyl, Propyl, Isopropyl, 1-Methylpropyl, Isobutyl, Butyl, 2-Methylbutyl, Pentyl, 3-Methylpentyl, Hexyl, Heptyl, Octyl, Nonyl, Decyl, Undecyl, Dodecyl, Methoxy, Aethoxy, Propyloxy, Isopropyloxy, 1-Methylpropyloxy, Butyloxy, 2-Methylbutyloxy, Pentyloxy, 3-Methylpentyloxy, Hexyloxy, Heptyloxy, Octyloxy, Nonyloxy, Decyloxy, Undecyloxy, Dodecyloxy, Methylthio, Aethylthio, Propylthio, Butylthio, Pentylthio, Hexylthio, Heptylthio, Methoxymethyl, Aethoxymethyl, Propyloxymethyl, Methoxyäthyl, Methoxypropyl, Methylthiomethyl, Aethylthiomethyl, Methylthioäthyl, Methoxymethoxy, Aethoxymethoxy, Methoxyäthoxy und dergleichen.

Die neuen Seitenkettenpolymere können erfindungsgemäss dadurch hergestellt werden, dass man ein Monomer der allgemeinen Formel

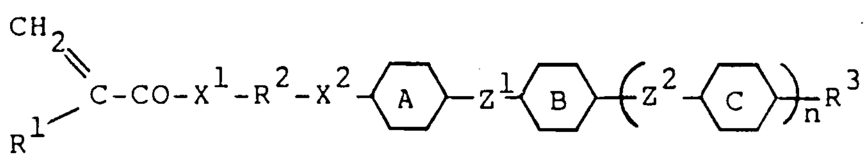

II

worin $R^1$, $R^2$, $R^3$, $X^1$, $X^2$, $Z^1$, $Z^2$, n und
die Ringe A, B und C die in Formel I gegebenen Bedeutungen haben,
allein oder zusammen mit Comonomeren polymerisiert.

Die Polymerisation kann an sich bekannter Weise, vorzugsweise durch radikalische Polymerisation, und unter üblichen Bedingungen erfolgen. Die Umsetzung wird im allgemeinen mit Vorteil in einem inerten organischen Lösungsmittel durchgeführt, beispielsweise in einem Aether, einem Alkohol, einem gegebenenfalls chlorierten, gesättigten oder aromatischen Kohlenwasserstoff, einem Amid, einem Harnstoffderivat oder einem Sulfoxid, wie Tetrahydrofuran, Methanol, Aethanol, Hexan, Chloroform, Benzol, Toluol, Xylol, Chlorbenzol, Dimethylformamid, Diäthylformamid, N-Methylpyrrolidon, Hexamethylphosphorsäuretriamid, Tetramethylharnstoff, N,N'-Dimethyl-N,N'-propylenharnstoff, Dimethylsulfoxid und dergleichen. In Alkoholen und aromatischen Lösungsmitteln wird im allgemeinen eine Lösungsfällungspolymerisation beobachtet. Bei vielen Anwendungen werden jedoch Lösungsmittel bevorzugt, in denen das Polymer löslich ist, beispielsweise Amide, Harnstoffderivate und Sulfoxide.

Die Polymerisation kann beispielsweise photochemisch, thermisch und/oder mit Radikalbildnern induziert werden. Als Radikalbildner können übliche Verbindungen verwendet werden, wie Azoisobutyronitril, Benzoylperoxid und dergleichen.
Bevorzugt sind im allgemeinen Radikalbildner, die bei etwa 50-150 °C oder bei höherer Temperatur zerfallen. Die photochemisch induzierte Polymerisation kann z.B. durch UV-Bestrahlung in Gegenwart von üblichen Photoinitiatoren, wie Benzophenon, Acetophenon, $\omega,\omega$-Dimethoxy-$\omega$-phenylacetophenon, Benzoin und dergleichen erfolgen.

Der Polymerisationsgrad kann insbesondere über die Monomerkonzentration beeinflusst werden, hängt aber ebenfalls vom verwendeten Monomer der Formel II, allfälligen Comonomeren, der Initiatorkonzentration, dem Lösungsmittel und der Temperatur ab. Durch solche Massnahmen kann das Zahlenmittel des Molekulargewichtes des Polymers (gemessen durch Gelpermeationschromatographie mit Dimethylformamid und Polystyrolstandards) beispielsweise in einem Bereich von etwa 5000-2000000 g/Mol, vorzugsweise etwa 10000-200000 g/Mol und besonders bevorzugt etwa 20000-120000 variiert werden. Die Konzentration an Monomer der Formel II im Reaktionsgemisch kann vorzugsweise etwa 3-20 Gew.-%, beispielsweise etwa 10 Gew.-% bezogen auf das Lösungsmittel betragen. Die Initiatorkonzentration beträgt typischerweise etwa 0,1-4,0 Gew.-%, beispielsweise etwa 1 Gew.-% bezogen auf das Monomer der Formel II.

Die Polymerisation kann bei üblichen Bedingungen, beispielsweise bei etwa 0-150 °C und unter Normaldruck durchgeführt werden. Bei Verwendung eines Radikalinitiators sollte die Temperatur jedoch vorzugsweise im thermischen Zerfallsbereich des Radikalinitiators liegen.

Die Polymerisation erfolgt je nach gewünschtem Produkt als Homopolymerisation eines Monomers der Formel II oder als Copolymerisation eines Monomers der Formel II mit einem oder mehreren weiteren Comonomeren der Formel II und/oder anderen Comonomeren. Geeignete andere Comonomere sind dem Fachmann bekannt. Bevorzugt sind im allgemeinen Comonomere, welche eine Gruppe mit gewünschten Eigenschaften, z.B. eine mesogene Gruppe, eine Gruppe mit nicht-linearen optischen Eigenschaften, ein Farbstoffradikal, etc., über einen Spacer an eine polymerisierbare Gruppe gebunden aufweisen. Durch Verwendung von Comonomeren mit 2 oder mehreren polymerisierbaren Gruppen können ferner in an sich bekannter Weise auch vernetzte Polymere erhalten werden. Weiterhin können nach an sich bekannten Methoden Polymere mit reaktiven Gruppen hergestellt werden durch Umsetzung mit Comonomeren, welche neben der polymerisierbaren Gruppe eine reaktive, aber nicht polymerisierbare Gruppe aufweisen. Geeignete reaktive Gruppen (z.B. Isocyanat, Oxacyclopropyl, Hydroxy, Carboxy) und Monomere sind dem Fachmann grundsätzlich bekannt. Sie ermöglichen insbesondere nach erfolgter Polymerisation das Einbringen von kovalent gebundenen Farbstoffen und/oder Verbindungen mit nicht-linearen optischen Eigenschaften, die Einführung weiterer mesogener Gruppen und die Vernetzung des Polymers. Die Umsetzung von im Polymer gegebenenfalls vorhandenen reaktiven Gruppen durch polymeranaloge Reaktionen kann in an sich bekannter Weise erfolgen.

Die Monomere der Formel II sind neu und ebenfalls Gegenstand der vorliegenden Erfindung.

Die Verbindungen der Formel II können dadurch hergestellt werden, dass man

a) zur Herstelung der Verbindungen der Formel II, worin $Z^1$ für -CONH- oder -NHCO- steht, eine Verbindung der allgemeinen Formel

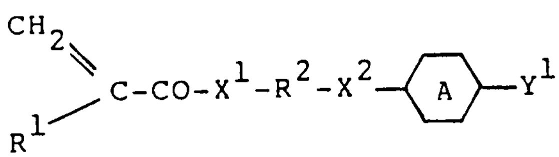

III

und eine Verbindung der allgemeinen Formel

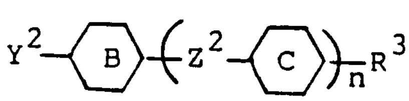

IV

worin eine der Gruppen $Y^1$ und $Y^2$ für -COOH und die andere der Gruppen $Y^1$ und $Y^2$ für $-NH_2$ stehen, $Z^2$ eine einfache Kovalenzbindung, $-CH_2CH_2-$, $-CH_2O-$, $-OCH_2-$, -N = N-, -CONH- oder -NHCO- bezeichnet, und $R^1$, $R^2$, $R^3$, $X^1$, $X^2$, n und die Ringe A, B und C die in Formel II gegebenen Bedeutungen haben,
oder geeignete Derivate dieser Verbindungen umsetzt, oder
b) zur Herstellung der Verbindungen der Formel II, worin n für die Zahl 1 und $Z^2$ für -CONH- oder -NHCO- stehen, eine Verbindung der allgemeinen Formel

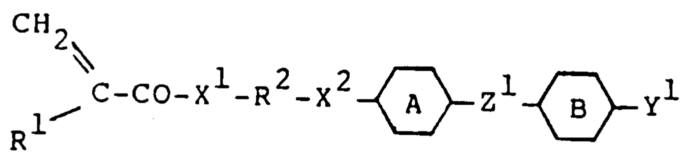

V

und eine Verbindung der allgemeinen Formel

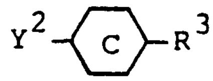

VI

worin eine der Gruppen $Y^1$ und $Y^2$ für -COOH und die andere der Gruppen $Y^1$ und $Y^2$ für $-NH_2$ stehen, $Z^1$ eine einfache Kovalenzbindung, $-CH_2-CH_2-$, $-CH_2O-$, $-OCH_2-$, -N = N-, -CONH- oder -NHCO- bezeichnet, und $R^1$, $R^2$, $R^3$, $X^1$, $X^2$, und die Ringe A, B und C die in Formel II gegebenen Bedeutungen haben,
oder geeignete Derivate dieser Verbindungen umsetzt, oder
c) eine Verbindung der allgemeinen Formel

$CH_2 = CR^1\text{-}COOH$ VII

und eine Verbindung der allgemeinen Formel

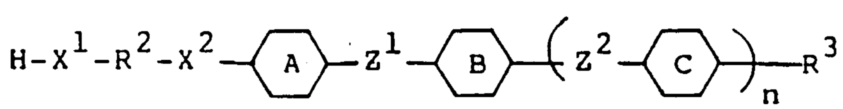

VIII

worin $R^1$, $R^2$, $R^3$, $X^1$, $X^2$, $Z^1$, $Z^2$, n und die Ringe A, B und C die in Formel II gegebenen Bedeutungen haben,
oder geeignete Derivate dieser Verbindungen umsetzt.

Die Verbindungen der Formeln IV, VI und VIII sind bekannte oder Analoge bekannter Verbindungen. Issbesondere wurden solche Verbindungen bereits als Zwischenprodukte zur Herstellung von Flüssigkristallen beschrieben, z.B. in den in D. Demus et al., Flüssige Kristalle in Tabellen, Band I (1976) und Band II (1984), VEB Deutscher Verlag für Grundstoffindustrie, Leipzig angegebenen Literaturstellen. Die Amide der Formel VIII können beispielsweise auch in Analogie zu den entsprechenden Estern hergestellt werden, indem anstelle der Veresterung eine Amid-Verknüpfung erfolgt. Geeignete Methoden zur Einführen der Gruppe $-X^1H$ in Formel VIII sind dem Fachmann bekannt, beispielsweise aus der Herstellung von bekannten Seitenkettenpolymeren und aus der Herstellung von niedermolekularen Flüssigkristallen mit Heteroatomen in der Seitenkette.

Die Verbindungen der Formel VII sind bekannte Bausteine zur Herstellung von Acrylat-Polymeren.

Die Verbindungen der Formel III und V sind zum Teil ebenfalls bekannt, z.B. aus DE-A-2722589, Makromol.Chem. 183, 2311-2321 (1982), Makromol. Chem., Rapid Commun. 5, 393-398 (1984) und SPIE Vol. 682 Molecular and Polymeric Optoelectronic Materials, Fundamentals and Applications (1986), S. 56-64. Die Verbindungen der Formel III können beispielsweise dadurch hergestellt werden, dass man eine Verbindung der Formel VII und eine Verbindung der allgemeinen Formel

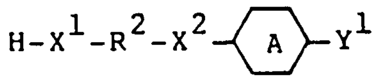 IX

worin $R^2$, $X^1$, $X^2$, $Y^1$, und Ring A die in Formel III angegebenen Bedeutungen haben,
oder geeignete Derivate dieser Verbindungen umsetzt. Analog können die Verbindungen der Formel V beispielsweise dadurch hergestellt werden, dass man eine Verbindung der Formel VII und eine Verbindung der allgemeinen Formel

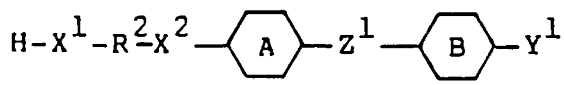 X

worin $R^2$, $X^1$, $X^2$, $Y^1$, $Z^1$ und die Ringe A und B die in Formel V gegebenen Bedeutungen haben,
oder geeignete Derivate dieser Verbindungen umsetzt.

Geeignete Derivate der Carbonsäuren der Formel III-VII sind beispielsweise die Säurechloride und die Säurebromide. Sie können nach bekannten Methoden aus den Carbonsäuren erhalten werden, beispielsweise durch Umsetzung mit Thionylchlorid, Thionylbromid, Phosphoroxychlorid, Phosphoroxybromid, Phosphorpentachlorid und dergleichen.

Die Herstellung der Verbindungen der Formel II gemäss obigen Verfahrensvarianten a) und b) sowie die Umsetzungen der Verbindungen der Formel VII oder geeigneter Derivate dieser Verbindungen mit den Verbindungen der Formeln VIII-X, worin $X^1$ für -NH- oder -N($CH_3$)- steht, können in an sich bekannter Weise durchgeführt werden. Die Reaktion kann unter den für die Herstellung von Amiden üblichen Bedingungen erfolgen. In der Regel erfolgt die Amid-Bildung vorzugsweise durch Umsetzung des Amins mit dem Säurechlorid oder -bromid. Besonders bevorzugt wird die Umsetzung in einem Aether, z.B. Tetrahydrofuran, und gegebenenfalls in Gegenwart eines tertiären Amins, z.B. Triäthylamin, durchgeführt.

Die Umsetzung der Carbonsäuren der Formel VII oder geeigneter Derivate dieser Verbindungen mit Verbindungen der Formeln VIII-X, worin $X^1$ Sauerstoff oder Schwefel bedeutet, kann nach an sich bekannten Veresterungsmethoden erfolgen. Vorzugsweise wird eine Carbonsäure der Formel VII oder deren Säurechlorid oder -bromid mit dem Alkohol oder Thiol umgesetzt. Die Umsetzung der Säurechloride oder -bromide erfolgt zweckmässig in einem inerten organischen Lösungsmittel, wie Diäthyläther, Tetrahydrofuran, Dimethylformamid, Benzol, Toluol, Cyclohexan, Tetrachlorkohlenstoff und dergleichen, und/oder in Gegenwart eines Säurebindemittels, wie Triäthylamin oder Pyridin. Die Umsetzung der Carbonsäuren kann beispielsweise in Gegenwart von 4-(Dimethylamino)pyridin und N,N′-Dicyclohexylcarbodiimid oder in Gegenwart von Oxalylchlorid und Dimethylformamid oder in Analogie zu den in DE-A-2722589 und FR-A-2573082 beschriebenen Verfahren erfolgen.

Im allgemeinen sind diejenigen Polymere und Zwischenprodukte der obigen Formeln bevorzugt, worin $X^1$ Sauerstoff bezeichnet. Ferner sind im allgemeinen die Acryl- und die Methacrylderivate bevorzugt, d.h. diejenigen Verbindungen, worin $R^1$ Wasserstoff oder Methyl darstellt. $X^2$ steht in den obigen Verbindungen vorzugsweise für eine einfache Kovalenzbindung oder Sauerstoff, insbesondere für Sauerstoff.

Gruppen $R^2$ ohne Heteroatom sind im allgemeinen bevorzugt. Gewünschtenfalls kann jedoch $R^2$ eine Aether- oder Thioäther-Gruppierung aufweisen, d.h. eine nicht endständige Methylgruppe in $R^2$ kann durch Sauerstoff oder Schwefel ersetzt werden, ohne dadurch die Eigenschaften des Polymers wesentlich zu ändern. Die Länge der Spacergruppe $R^2$ beeinflusst u.a. den Schmelzpunkt des Polymers, wobei längere Spacer im allgemeinen zu höheren Schmelzpunkten führen. Vorzugsweise bedeutet $R^2$ eine Alkylengruppe mit 3-11, insbesondere 3-8 Kohlenstoffatomen oder eine davon abgeleitete Gruppe, worin eine nicht endständige Methylengruppe durch Sauerstoff oder Schwefel ersetzt ist. Für Anwendungen als Kristalle kann der Spacer $R^2$ jedoch auch länger sein und beispielsweise eine Alkylengruppe mit 7-13 Kohlenstoffatomen oder eine davon abgeleitete Gruppe bedeuten. Gruppe $R^2$ umfasst geradkettige und verzweigte Gruppen. Bevorzugt sind im allgemeinen die geradkettigen Gruppen, d.h. die Gruppe der Formel $-(CH_2)_p-X^3-(CH_2)_q-$, worin $X^3$ Methylen, Sauerstoff oder Schwefel bezeichnet, p and q ganze Zahlen von 1 bis 13 bedeuten und die Summe $p+q$ 2-14, bevorzugt 2-10 und insbesondere etwa 2-7 beträgt. Besonders bevorzugt ist im allgemeinen Polymethylen ($X^3$ = Methylen), wie Trimethylen, Tetramethylen, Pentamethylen, Hexamethylen, Heptamethylen.

Die Ringe A, B und C in den obigen Formeln bezeichnen unabhängig voneinander vorzugsweise 1,4-Phenylen, Pyridin-2,5-diyl, Pyrimidin-2,5-diyl, Pyrazin-2,5-diyl, Pyridazin-3,6-diyl oder Ring C auch trans-1,4-Cyclohexylen. Gewünschtenfalls können die Ringe einen oder mehrere laterale Halogen-, Methyl-, Methoxy- und/oder Cyanosubstituenten aufweisen zwecks Modifizierung der Phasenübergangstemperaturen, der dielektrischen Anisotropie etc. Vorzugsweise ist höchstens einer der Ringe A, B und C ein heterocyclischer Ring. Besonders bevorzugt sind diejenigen Polymere und Zwischenprodukte, worin Ring A 1,4-Phenylen oder mit Halogen, Methyl, Methoxy und/oder Cyano substituiertes 1,4-Phenylen darstellt, Ring B Pyridin-2,5-diyl, Pyrimidin-2,5-diyl, Pyrazin-2,5-diyl, Pyridazin-3,6-diyl, 1,4-Phenylen oder mit Halogen, Methyl, Methoxy und/oder Cyano substituiertes 1,4-Phenylen bezeichnet, und Ring C trans-1,4-Cyclohexylen, 1,4-Phenylen oder mit Halogen, Methyl, Methoxy und/oder Cyano substituiertes 1,4-Phenylen bedeutet. 1,4-Phenylengruppen sind im allgemeinen vorzugsweise unsubstituiert.

Eine gegebenenfalls vorhandene Azogruppe -N=N- für $Z^1$ oder $Z^2$ steht vorzugsweise zwischen 2 aromatischen Ringen. Eine bevorzugte Gruppe von erfindungsgemässen Polymeren und Zwischenprodukten sind diejenigen, worin $Z^1$ -CONH- oder -NHCO- darstellt und $Z^2$ eine einfache Kovalenzbindung, $-CH_2CH_2-$, $-CH_2O-$, $-OCH_2-$, -N=N-, -CONH- oder -NHCO-bezeichnet. Besonders bevorzugt sind im allgemeinen diejenigen, worin $Z^1$ -CONH- darstellt. Ferner steht $Z^2$ besonders bevorzugt für eine einfache Kovalenzbindung oder -N=N-.

Eine in $Z^1$ oder $Z^2$ oder gegebenenfalls in einem Comonomer vorhandene Azogruppe -N=N- ermöglicht eine optische cis/trans-Isomerisierung. Die dadurch bewirkte Störung der Flüssigkristallphase kann z.B. in analoger Weise zu der in Makromol. Chemie 8, 59 (1987) und 8, 467 (1987) beschriebenen Methode zur Herstellung von optischen Speichern ausgenützt werden.

Besonders bevorzugte erfindungsgemässe Polymere sind somit diejenigen mit einer monomeren Einheit der allgemeinen Formel

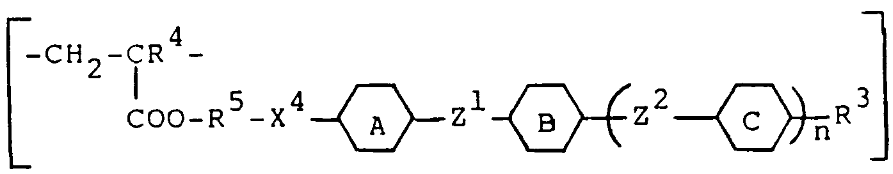

I-1

oder

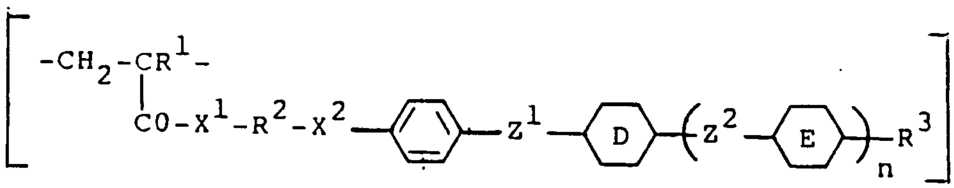

I-2

oder

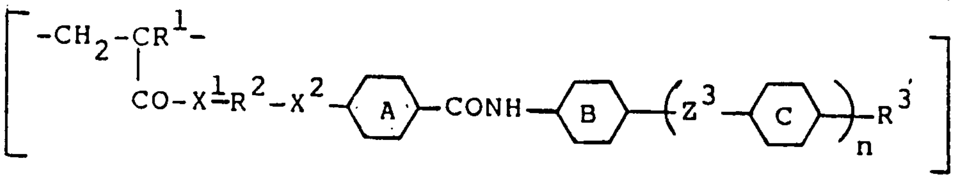

I-3

oder

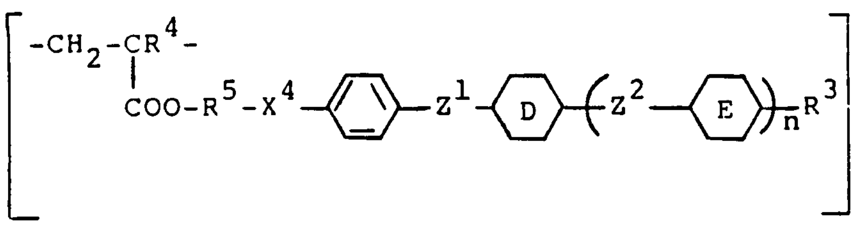

I-4

oder

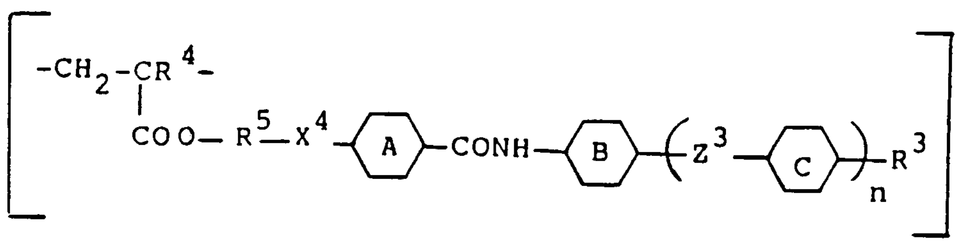

I-5

oder

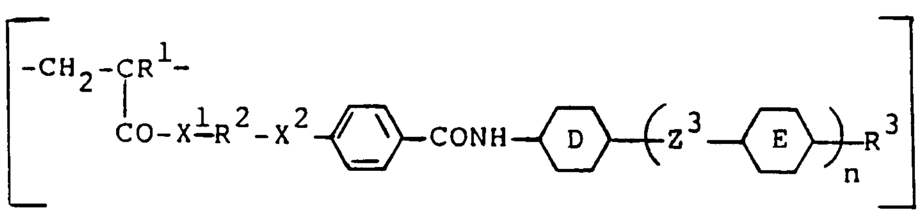

I-6

insbesondere der allgemeinen Formel

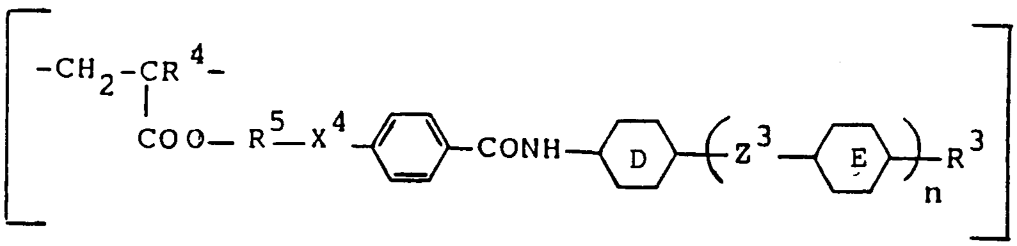

I-7

worin $R^1$, $R^2$, $R^3$, $X^1$, $X^2$, $Z^1$, $Z^2$, n und die Ringe A, B und C die obigen Bedeutungen haben; $R^4$ Wasserstoff oder Methyl darstellt; $R^5$ Polymethylen mit 3-11 Kohlenstoffatomen bedeutet; $X^4$ eine einfache Kovalenzbindung oder Sauerstoff bezeichnet; Ring D 1,4-Phenylen, Pyridin-2,5-diyl, Pyrimidin-2,5-diyl, Pyrazin-2,5-diyl oder Pyridazin-3,6-diyl darstellt; Ring E 1,4-Phenylen oder trans-1,4-Cyclohexylen darstellt; und $Z^3$ eine einfache Kovalenzbindung, $-CH_2CH_2-$, $-CH_2O-$, $-OCH_2-$, -N=N-, -CONH- oder -NHCO- bezeichnet; mit der Massgabe, dass Ring E 1,4-Phenylen bzw. Ring C 1,4-Phenylen oder mit Halogen, Methyl, Methoxy und/oder Cyano substituiertes 1,4-Phenylen darstellt, wenn $Z^2$ bzw. $Z^3$ -N=N- bezeichnet.

Besonders bevorzugte Monomere der Formel II sind folglich diejenigen, worin die Symbole die den Formeln I-1 bis I-7 entsprechenden Bedeutungen haben.

Bevorzugte Polymethylengruppen $R^5$ sind diejenigen mit 3-8 Kohlenstoffatomen, insbesondere Hexamethylen. $X^4$ steht vorzugsweise für Sauerstoff. $Z^3$ bedeutet vorzugsweise eine einfache Kovalenzbindung oder -N=N-. Ring D bezeichnet vorzugsweise 1,4-Phenylen, Pyridin-2,5-diyl oder Pyrimidin-2,5-diyl, insbesondere 1,4-Phenylen. Ring E steht im allgemeinen bevorzugt für 1,4-Phenylen.

Im allgemeinen sind Polymere mit einer monomeren Einheit, worin n für die Zahl 0 steht, bevorzugt. Falls höhere Phasenübergangstemperaturen erwünscht sind, werden jedoch mit Vorteil Monomere verwendet, worin n für die Zahl 1 steht.

Beispiele bevorzugter erfindungsgemässer Polymere sind diejenigen, welche als monomere Einheit eine der Gruppen der folgenden allgemeinen Formeln aufweisen:

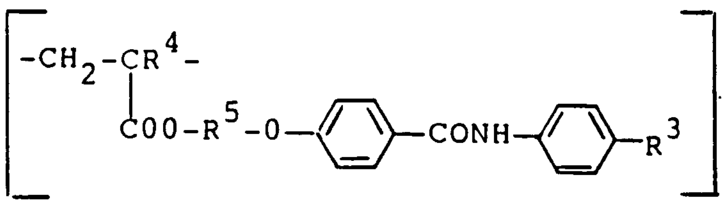

I-8

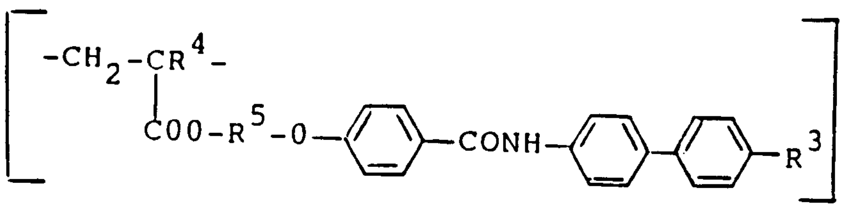

I-9

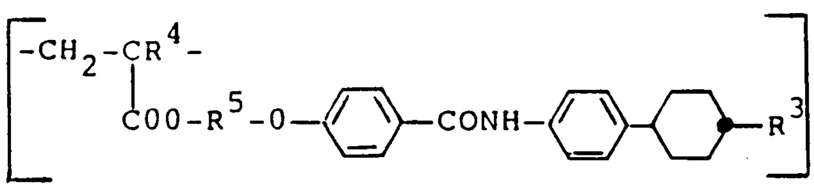

I-10

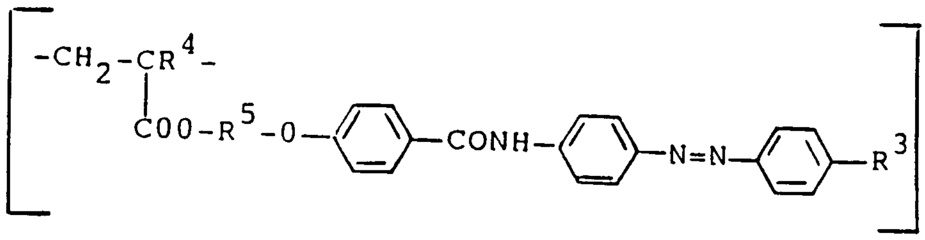

I-11

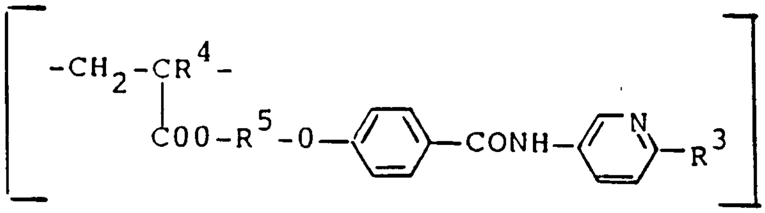

I-12

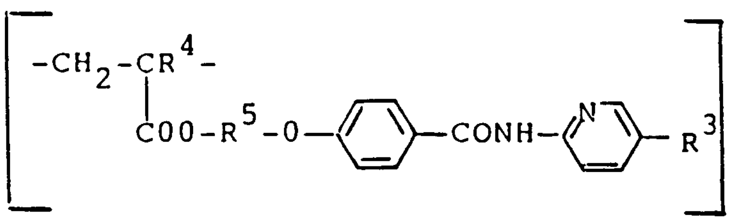

I-13

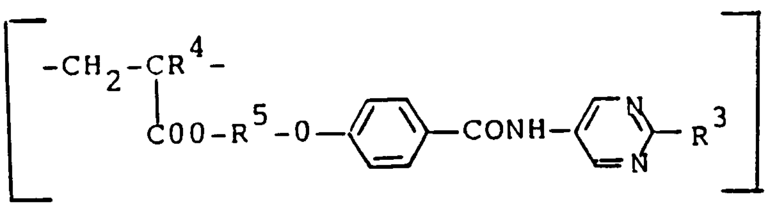

I-14

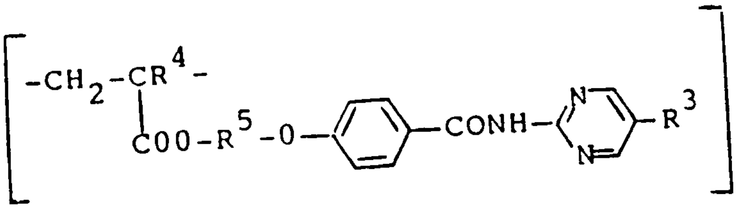

I-15

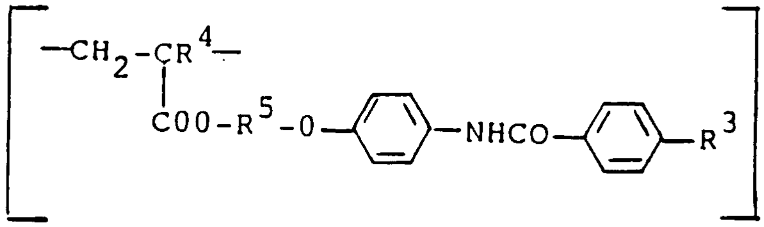

I-16

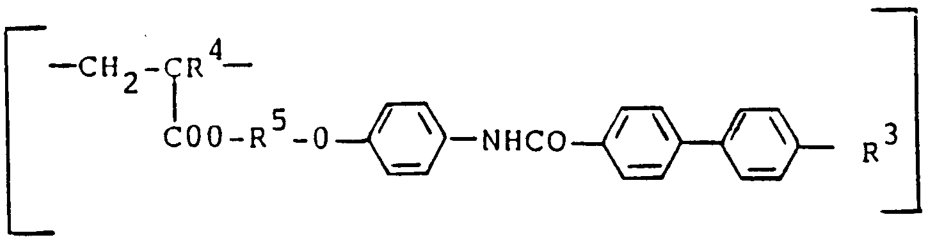

I-17

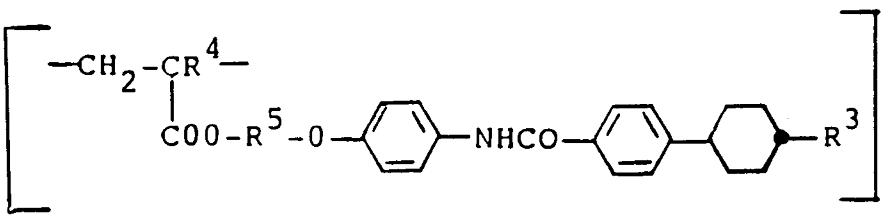

I-18

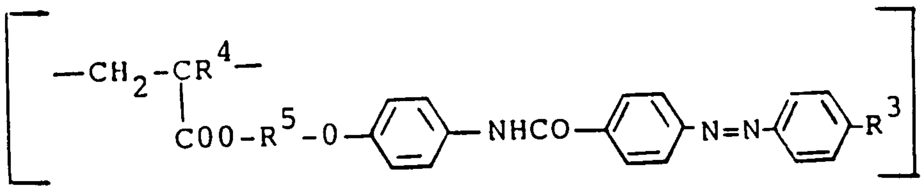

I-19

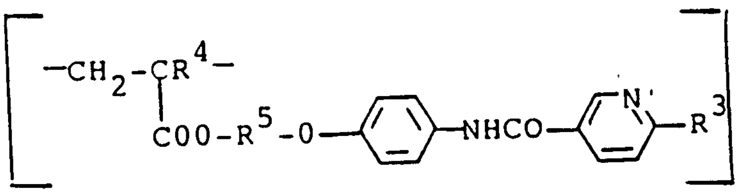

I-20

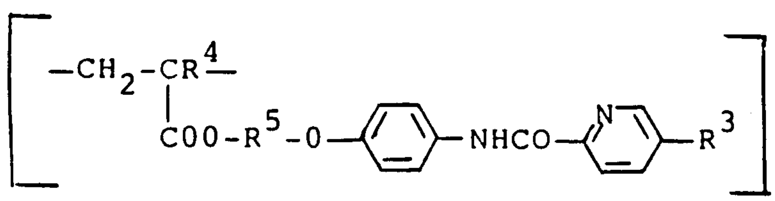

I-21

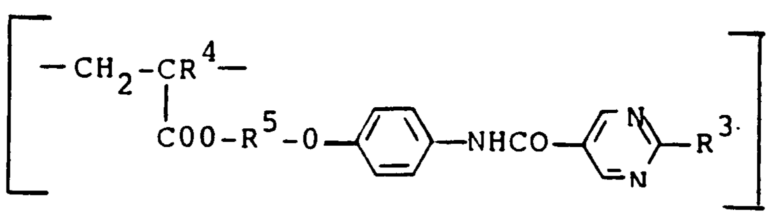

I-22

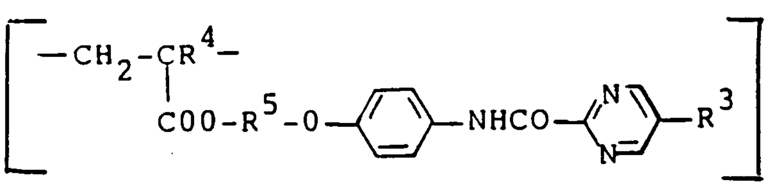

I-23

worin $R^3$, $R^4$ und $R^5$ die obigen Bedeutungen haben.

In $R^3$ gegebenenfalls vorhandene Alkylgruppen, in denen gegebenenfalls eine oder zwei nicht benachbarte Methylengruppen durch Sauerstoff und/oder Schwefel ersetzt sind, können geradkettig oder verzweigt sein und besitzen vorzugsweise etwa 1-12, besonders bevorzugt etwa 1-7 Kohlenstoffatome. Bevorzugte derartige Gruppen sind $C_1$-$C_{12}$-Alkyl und $C_1$-$C_{12}$-Alkoxy, insbesondere $C_1$-$C_7$-Alkyl und $C_1$-$C_7$-Alkoxy.

In den obigen Formeln I, II und I-1 bis I-23 steht $R^3$ jeweils vorzugsweise für Fluor, Chlor, Brom, Cyano, Nitro, $C_1$-$C_{12}$-Alkyl oder $C_1$-$C_{12}$-Alkoxy.

Die erfindungsgemässen Polymere besitzen vorzugsweise eine glasige, eine flüssigkristalline und eine isotrope Phase oder einen Phasenübergang kristallin-isotrop. Dies kann in der Regel leicht durch geeignete Wahl der mesogenen Gruppe, des Spacers $R^2$ bzw. $R^5$ und dergleichen erreicht werden. Beispielsweise führen monomere Einheiten der Formel I, worin n für die Zahl 1 steht, im allgemeinen zur Erhöhung aller

Phasenübergangstemperaturen, während z.B. Halogen in $R^3$ vor allem zu vergleichsweise höheren Schmelzpunkten und anderseits Alkoxy, Alkyl etc. in $R^3$ vor allem zu vergleichsweise niedrigen Schmelzpunkten und oft zu Glasphasen führt.

Die Eigenschaften der erfindungsgemässen Polymere können ebenfalls beträchtlich variiert werden durch Copolymerisation von Monomeren der Formel II untereinander und/oder mit andern Comonomeren sowie durch Mischen der erfindungsgemässen Polymere untereinander und/oder mit anderen Materialien. Die Copolymerisation ermöglicht beispielsweise Polymere mit weiteren mesogenen und/oder optisch aktiven Gruppen, mit kovalent gebundenen Farbstoffen, vernetzte Polymere und dergleichen. Solche Gruppen können eingeführt werden durch Copolymerisation mit entsprechenden Comonomeren oder durch Copolymerisation mit Comonomeren, welche eine reaktive Gruppe aufweisen, und anschliessende Umsetzung des Copolymers mit geeigneten, die gewünschte Gruppe aufweisenden Verbindungen. Anderseits können die erfindungsgemässen Polymere auch untereinander und/oder mit anderen Polymeren, chiralen Dotierstoffen, Farbstoffen, niedermolekularen Flüssigkristallen und dergleichen gemischt werden. Aus Makromol. Chem. Rapid. Commun. 1, 31 (1980) ist z.B. bekannt, dass durch Beimischen von Substanzen mit niederen Molmassen die Glasübergangstemperatur wesentlich gesenkt werden kann, während der Klärpunkt relativ wenig beeinflusst wird. Geeignete Comonomere und Mischungskomponenten sind dem Fachmann grundsätzlich bekannt und hängen weitgehend vom Anwendungsgebiet ab. Die Erfindung betrifft daher insbesondere auch Copolymerisate und Gemische.

Die erfindungsgemässen Polymere sind somit Homopolymere mit einer monomeren Einheit der Formel I oder Copolymere mit einer monomeren Einheit der Formel I und einer oder mehreren weiteren monomeren Einheiten der Formel I und/oder einer oder mehreren, anderen, von Formel I verschiedenen, monomeren Einheiten. Die monomeren Einheiten der Formel I sind vorzugsweise Gruppen der Formeln I-1 bis I-23. Der Anteil an monomeren Einheiten der Formel I hängt im Falle von Copolymeren mit andern monomeren Einheiten hauptsächlich vom Charakter dieser andern Einheiten und vom Verwendungszweck ab. Im allgemeinen beträgt der Massenbruch an einer oder mehreren monomeren Einheiten der Formel I im Polymer mindestens etwa 30%, vorzugsweise mindestens etwa 50%. Der Massenbruch an gegebenenfalls vorhandenen, von Formel I verschiedenen monomeren Einheiten kann dementsprechend im allgemeinen bis zu etwa 70% betragen, beispielsweise etwa 0,1-70% und vorzugsweise etwa 1-50%.

Die erfindungsgemässen Gemische mit mindestens 2 Komponenten sind dadurch gekennzeichnet, dass mindestens eine Komponente ein Polymer mit einer monomeren Einheit der Formel I, vorzugsweise einer der Formeln I-1 bis I-23 ist. Die zweite und gegebenenfalls weitere Komponenten können z.B. weitere Polymere mit einer monomeren Einheit der Formel I, andere Seitenkettenpolymere, Verbindungen mit bekannten optischen Eigenschaften, niedermolekulare Flüssigkristalle und/oder andere in Polymeren üblicherweise verwendbare Zusätze, z.B. Weichmacher, sein. Der Anteil an Polymer mit einer monomeren Einheit der Formel I hängt im allgemeinen von der Art der weiteren Komponenten und vom Verwendungszweck ab. Der Anteil an einem oder mehreren Polymeren mit einer monomeren Einheit der Formel I beträgt im allgemeinen mindestens etwa 30 Gew.-%, vorzugsweise mindestens etwa 50 Gew.-%. Der Anteil an gegebenenfalls vorhandenen weiteren Zusätzen (d.h. an Zusätzen, welche kein Polymer mit einer monomeren Einheit der Formel I sind) kann dementsprechend bis zu etwa 70 Gew.-% betragen, beispielsweise etwa 0,1-70 Gew.-% und vorzugsweise etwa 1-50 Gew.-%. Die erfindungsgemässen Gemische besitzen vorzugsweise eine Glasphase und/oder eine flüssigkristalline Phase.

Die Kombination von Flüssigkristall- und Polymereigenschaften, die grosse Variationsbreite dieser Eigenschaften und die hohe Stabilität und leichte Verarbeitbarkeit der erfindungsgemässen Polymere eröffnen einen breiten Anwendungsbereich, z.B. als Kristalle, Gläser, Folien, Filme, Membranen oder Flüssigkristalle. Die erfindungsgemässen Polymere können daher in den verschiedensten Bereichen der Technik Verwendung finden. Geeignete Anwendungsgebiete sind dem Fachmann grundsätzlich bekannt z.B. aus Angew. Chemie 99, 840 (1987). Ein bevorzugter Aspekt betrifft die Verwendung in der Optik (lineare und nicht-lineare Optik), insbesondere die Verwendung in der integrierten Optik, in der Optoelektronik und/oder zur Informationsspeicherung. Für diesen Zweck können die erfindungsgemässen Polymere oder Polymergemische gewünschtenfalls als Matrix zur Einlagerung von Verbindungen mit bestimmten optischen Eigenschaften (z.B. Farbstoffe, Verbindungen mit grosser molekularer Hyperpolarisierbarkeit etc.) dienen oder kovalent gebundene Gruppen mit solchen Eigenschaften aufweisen. Ein weiterer bevorzugter Aspekt betrifft die Verwendung zur Trennung von Stoffgemischen, insbesondere die Verwendung für Trennmembranen zur Trennung von Gasgemischen und die Verwendung als flüssigkristalline, stationäre Phase in der Gaschromatographie. Zur Verwendung für Trennmembranen können die erfindungsgemässen Polymere vorzugsweise auch vernetzt sein.

Bevorzugte, zur Copolymerisation mit Monomeren der Formel II geeignete Comonomere sind die Verbindungen der allgemeinen Formel

$CH_2=CR^6-COO-R^7-R^8$ XI

worin $R^6$ Wasserstoff, Methyl, Aethyl, Fluor, Chlor, Brom, Cyano oder Phenyl darstellt; $R^7$ Alkylen mit 1-15 Kohlenstoffatomen bedeutet; und $R^8$ eine mesogene Gruppe ohne Amidfunktion, ein Farbstoffradikal, eine Gruppe mit nicht-linearen optischen Eigenschaften (insbesondere eine Gruppe mit grosser molekularer Hyperpolarisierbarkeit) oder -NCO, Oxacyclopropyl $-C_2H_3O$, Hydroxy oder Carboxy bezeichnet.

Bevorzugte Copolymere mit von Formel II verschiedenen Comonomeren sind somit diejenigen, welche als monomere Einheiten eine oder mehrere Gruppen der Formel I und eine oder mehrere Gruppen der allgemeinen Formel

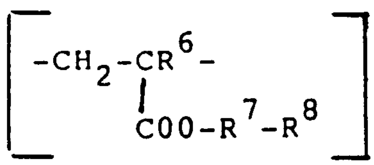 XII

worin $R^6$, $R^7$ und $R^8$ die obigen Bedeutungen haben,
aufweisen.

Vorzugsweise steht $R^6$ für Wasserstoff oder Methyl. $R^7$ bedeutet vorzugsweise geradkettiges Alkylen (d.h. Methylen oder Polymethylen) mit 1-15, insbesondere 1-11 Kohlenstoffatomen.

Geeignete mesogene Gruppen $R^8$ sind dem Fachmann bekannt z.B. aus EP-A-7574, EP-A-171045, EP-A-188785, EP-A-230898, GB-A-2185487, DE-A-2722589 und SPIE Vol. 682, Molecular und Polymeric Optoelectronic Materials, Fundamentals and Application, S. 56-64 (1986). Bevorzugte derartige Copolymere sind diejenigen, welche als monomere Einheiten eine oder mehrere Gruppen der Formel I und eine oder mehrere Gruppen der allgemeinen Formel

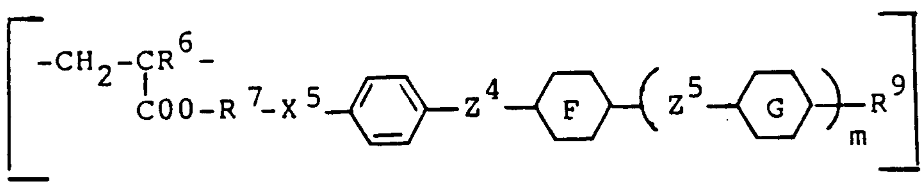 XII-1

worin $X^5$ eine einfache Kovalenzbindung oder Sauerstoff bezeichnet; Ring F Pyrimidin-2,5-diyl, 1,4-Phenylen oder mit Halogen, Methyl, Methoxy und/oder Cyano substituiertes 1,4-Phenylen bedeutet; Ring G 1,4-Cyclohexylen, 1,4-Phenylen oder mit Halogen, Methyl, Methoxy und/oder Cyano substituiertes 1,4-Phenylen darstellt; $Z^4$ und $Z^5$ unabhängig voneinander eine einfache Kovalenzbindung, -COO-, -OOC-, $-CH_2CH_2-$, $-CH_2O-$, $-OCH_2-$, -CH=CH- oder -N=N- bezeichnen; m für die Zahl 0 oder 1 steht; $R^9$ Wasserstoff, Halogen, Cyano, Nitro, Alkyl oder Alkoxy darstellt; und $R^6$ und $R^7$ die obigen Bedeutungen haben,
aufweisen.

Die Eigenschaften der erfindungsgemässen Polymere können ferner auch dadurch modifiziert werden, dass man z.B. ein Polymer, welches eine monomere Einheit der Formel XII-1 aufweist, mit dem erfindungsgemässen Polymer mischt. Solche Gemische können ein- oder mehrphasig sein.

In obiger Formel XII-1 steht vorzugsweise Ring F für 1,4-Phenylen, Fluor-1,4-phenylen oder Pyrimidin-2,5-diyl und Ring G für 1,4-Phenylen, Fluor-1,4-phenylen oder trans-1,4-Cyclohexylen. Eine der Gruppen $Z^4$ und $Z^5$ (bevorzugt $Z^5$) steht vorzugsweise für eine einfache Kovalenzbindung. Die Alkyl- und Alkoxyreste $R^9$ können geradkettig oder verzweigt sein und besitzen vorzugsweise 1-12 Kohlenstoffatome.

Geeignete Farbstoffe und Radikale $R^8$ von Farbstoffen sind dem Fachmann bekannt z.B. aus EP-A-171045. Grundsätzlich sind alle üblichen, zur Anwendung in Flüssigkristallen geeigneten, dichroitischen Farbstoffe verwendbar, insbesondere die Zao-, Anthrachinon-, Stilben- und Cyaninfarbstoffe. Der Ausdruck "Farbstoffradikal" bezeichnet hierbei ein Radikal, welches formal aus dem Farbstoffmolekül durch Abspaltung eines Wasserstoffatoms oder eine Alkylgruppe erhalten wird, d.h. die Spacergruppe $R^7$ ersetzt ein Wasserstoffatom oder eine Alkylgruppe. Solche gefärbte Polymere eignen sich z.B. als farbige Flüssigkristalle oder als Materialien für optische Speichermedien. Kovalent gebundene Farbstoffe ermöglichen eine

relativ hohe und temperaturunabhängige Farbstoffkonzentration. Gewünschtenfalls kann jedoch der Farbstoff auch dem Polymer beigemischt werden.

Geeignete Verbindungen und Gruppe $R^8$ mit nicht-linearen optischen Eigenschaften, insbesondere mit grosser molekularer Hyperpolarisierbarkeit sind dem Fachmann bekannt z.B. aus EP-A-230898, GB-A-2185487, US 4659177, Macromolecules 15, 1385 (1982) und SPIE Vol. 682, Molecular und Polymeric Optoelectronic Materials, Fundamentals and Application, S. 56-64 (1986). Beispiele bevorzugter Verbindungen bzw. Gruppen sind Harnstoff und dessen Derivate (z.B. Derivate mit einem oder mehreren Alkyl- und/oder Arylresten), p-Nitroanilin und dessen Derivate (z.B. N-Alkyl-p-nitroanilin und N,N-Dialkyl-p-nitroanilin), Stilbenfarbstoffe, wie 4-Amino-4′-nitrostilben, 4-Hydroxy-4′-nitrostilben und deren Derivate (z.B. 4-Alkylamino-4-nitrostilben, 4-Dialkylamino-4′-nitrostilben und 4-Alkoxy-4′-nitrostilben), Cyaninfarbstoffe und dergleichen sowie davon abgeleitete Gruppen, vorzugsweise solche, welche formal durch Abspaltung eines Wasserstoffatoms oder einer Alkylgruppe an der Elektronendonorgruppe erhalten werden. Die Verbindungen mit grosser molekularer Hyperpolarisierbarkeit können somit kovalent an das Polymer gebunden sein oder dem Polymer beigemischt werden. Solche Materialien ermöglichen die Veränderung der Amplitude, Frequenz und Phase von eingestrahltem Licht. Sie sind vor allem von Interesse in der nicht linearen Optik zur Erzeugung der zweiten harmonischen Oberschwingung, da sie eine Frequenzverdoppelung von Laserlicht ermöglichen.

Polare Gastmoleküle oder Molekülsegmente führen in bekannten Seitenkettenpolymeren oft zur Bildung eigener Domänen mit antiparalleler Anordnung dieser Gastmoleküle oder Molekülsegmente. Diese weitgehend centrosymmetrische Anordnung steht aber der Erzeugung der zweiten harmonischen Oberschwingung entgegen, was die Bereitstellung geeigneter Materialien mit nicht-linearen optischen Eigenschaften beträchtlich erschwert. Die erfindungsgemässen Polymere sind aufgrund ihrer hohen Polarität und ihrer Fähgikeit, Wasserstoffbrücken auszubilden, wesentlich besser zur Einbettung polarer Moleküle und Molekülsegmente geeignet. Die Bildung polarer Domänen wird damit weitgehend zurückgedrängt.

Copolymere mit einer oder mehreren monomeren Einheiten der Formel XII, worin $R^8$ -NCO, Oxacyclopropyl, Hydroxy oder Carboxy bedeutet, ermöglichen nach erfolgter Polymerisation die kovalente Bindung von mesogenen Gruppen, Farbstoffradikalen, Gruppen mit grosser molekularer Hyperpolarisierbarkeit und dergleichen oder eine Vernetzung des Polymers. Geeignete Comonomere und die Umsetzung dieser Gruppen sind dem Fachmann grundsätzlich bekannt z.B. aus Houben-Weyl Band XIV, Teil 1, S. 1010-1079. Die Isocyanatogruppe eignet sich beispielsweise zur Addition von primären und sekundären Aminen (Bildung einer Harnstoffgruppe) oder in Gegenwart eines tertiären Amins auch zur Addition von Alkoholen (Bildung einer Urethangruppe). An die Oxacyclopropylgruppe (Epoxid) können beispielsweise in Gegenwart von Salicylsäurealdehyd Amine oder Carbonsäuren addiert werden unter Bildung von $\beta$-hydroxysubstituierten Aminen bzw. Estern. Die Hydroxygruppe kann beispielsweise mit Carbonsäuren und die Carboxygruppe kann beispielsweise mit Hydroxyverbindungen verestert werden. Durch Umsetzung mit Verbindungen, welche 2 oder mehrere Amino-, Hydroxy- bzw. Carboxygruppen aufweisen, wie z.B. Aethylendiamin, Glykol, Oxalsäure und dergleichen, kann ferner auf diese Weise eine Vernetzung des Polymers erfolgen.

Erfindungsgemässe vernetzte Polymere (Elastomere) können vorzugsweise auch dadurch erhalten werden, dass man die Polymerisation in Gegenwart eines Comonomers durchführt, welches 2 oder mehrere polymerisierbare Gruppen aufweist. Geeignete Comonomere zur Vernetzung des Polymers sind dem Fachmann bekannt und viele sind zudem im Handel erhältlich. Beispielsweise eignen sich Organopolysiloxane, welche mindestens 2 Vinylgruppen aufweisen (DE-A-3505744). Vernetzte Polymere besitzen eine verbesserte Formbeständigkeit und sind daher z.B. bei der Herstellung von Trennmembranen im allgemeinen bevorzugt.

Eine bevorzugte Gruppe von Comonomeren zur Herstellung von vernetzten Polymeren sind die Verbindungen der allgemeinen Formel

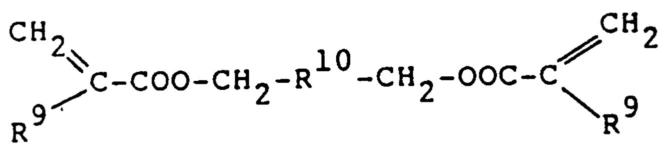

XIII

worin $R^{10}$ eine einfache Kovalenzbindung, Alkylen mit 1-15 Kohlenstoffatomen, $CH_2=CR^9$-COO-CH< oder $(CH_2=CR^9\text{-COO})_2C$< bedeutet, und $R^9$ Wasserstoff, Methyl, Aethyl, Fluor, Chlor, Brom, Cyano oder Phenyl darstellt.

Beispiele bevorzugter Comonomere der Formel XIII sind die Acrylate und Methacrylate von Glykol, 1,4-Butandiol, 1,6-Butandiol, Glyerin und Pentaerythrit. Bevorzugte erfindungsgemässe Elastomere sind daher

diejenigen, welche neben einer oder mehreren monomeren Einheiten der Formel I der Formel XIII entsprechende, vernetzte Gruppen aufweisen.

Die Erfindung wird durch die folgenden Beispiele weiter veranschaulicht. In Angaben zum Phasentyp bzw. zu Phasenumwandlungstemperaturen bedeuten C eine kristalline Phase, G eine Glasphase, S eine smektische Phase, N eine nematische Phase, Ch eine cholesterische Phase und I die isotrope Phase.

Beispiel 1

In einem Sulfierkolben mit Rührer, Wasserabscheider und Rückflusskühler wurden 90,1 g Acrylsäure (1,25 Mol), 29,8 g 4-(6-Hydroxyhexyloxy)benzoesäure, 4,5 g Hydrochinon, 4,5 g p-Toluolsulfonsäure und 300 ml Chloroform vorgelegt. Das Gemisch wurde ca. 20 Stunden zum Rückfluss erhitzt und dann mit einer Lösung von 3,25 g Natriumacetat-Trihydrat in 10 ml Wasser versetzt. Anschliessend wurde am Rotationsverdampfer das Chloroform und die überschüssige Acrylsäure abdestilliert. Der Rückstand wurde in 1,5 l Chloroform aufgenommen. Das Gemisch wurde 2 Stunden gerührt und dann filtriert. Das Filtrat wurde dreimal mit je 200 ml Wasser gewaschen, über Natriumsulfat getrocknet, filtriert und eingeengt. Der Rückstand wurde in 500 ml Toluol gelöst und die Lösung erneut filtriert. Das Filtrat wurde 12 Stunden auf 4°C und dann weitere 12 Stunden auf -20°C abgekühlt. Das erhaltene kristalline Produkt wurde abgenutscht, zweimal mit kaltem Toluol gewaschen und nochmals aus 400 ml Toluol umkristallisiert. Nach Trocknung bei 60°C/40 mbar wurden 29,2 g 4-(6-Acrylyloxyhexyloxy)benzoesäure mit Smp. (C-N) 92°C und Klp. (N-I) 110°C erhalten.

In analoger Weise können folgende Verbindungen hergestellt werden:

4-(3-Acrylyloxypropyloxy)benzoesäure;
4-(4-Acrylyloxybutyloxy)benzoesäure;
4-(5-Acrylyloxypentyloxy)benzoesäure;
4-(7-Acrylyloxyheptyloxy)benzoesäure;
4-(8-Acrylyloxyoctyloxy)benzoesäure;
4-(3-Methacrylyloxypropyloxy)benzoesäure, Smp. 157-158°C;
4-(4-Methacrylyloxybutyloxy)benzoesäure;
4-(5-Methacryloxypentyloxy)benzoesäure;
4-(6-Methacrylyloxyhexyloxy)benzoesäure, Smp. (C-N) 92°C, Klp. (N-I) 101°C;
4-(7-Methacrylyloxyheptyloxy)benzoesäure;
4-(8-Methacrylyloxyoctyloxy)benzoesäure;
4-(9-Methacrylyloxynonyloxy)benzoesäure;
4-(10-Methacrylyloxydecyloxy)benzoesäure;
4-(11-Methacrylyloxyundecyloxy)benzoesäure, Smp. (C-I) 116,5-117,3°C, Klp. (N-I) 105°C.

Beispiel 2

5 g 4-(6-Acrylyloxyhexyloxy)benzoesäure werden in 50 ml Thionylchlorid gelöst und dann mit einem Tropfen Dimethylformamid versetzt. Das Gemisch wurde 24 Stunden bei Raumtemperatur gerührt. Anschliessend wurde das überschüssige Thionylchlorid abdestilliert, der Rückstand in 50 ml trockenem Tetrahydrofuran gelöst und die Lösung erneut eingeengt.

Das erhaltene Säurechlorid wurde in 25 ml Tetrahydrofuran gelöst und diese Lösung innert 30 Minuten bei 0°C zu einem Gemisch aus 2,1 g 4-Methoxyanilin, 2,0 g Triäthylamin und 30 ml Tetrahydrofuran zugetropft. Das Reaktionsgemisch wurde einen Tag bei Raumtemperatur gerührt, dann mit 200 ml Chloroform versetzt, zweimal mit je 50 ml Wasser gewaschen, über Natriumsulfat getrocknet, filtriert und eingeengt. Der Rückstand wurde an Kieselgel mit Aethylacetat/Hexan (Vol. 8:12) chromatographisch gereinigt. Umkristallisation des erhaltenen Produktes aus Aethylacetat/Hexan ergab schliesslich 5,8 g 4-(6-Acrylyloxyhexyloxy)benzoesäure-4-methoxyanilid mit Smp. 139°C.

In analoger Weise können folgende Verbindungen hergestellt werden:

4-(3-Acrylyloxypropyloxy)benzoesäure-4-methylanilid;
4-(3-Acrylyloxypropyloxy)benzoesäure-4-methoxyanilid;
4-(3-Acrylyloxypropyloxy)benzoesäure-4-fluoranilid;
4-(3-Acrylyloxypropyloxy)benzoesäure-4-chloranilid;
4-(3-Acrylyloxypropyloxy)benzoesäure-4-bromanilid;
4-(3-Acrylyloxypropyloxy)benzoesäure-4-cyanoanilid;
4-(3-Acrylyloxypropyloxy)benzoesäure-N-(4′-cyano-4-biphenylyl)amid;
4-(3-Methacrylyloxypropyloxy)benzoesäure-4-methylanilid;

4-(3-Methacrylyloxypropyloxy)benzoesäure-4-methoxyanilid;
4-(3-Methacrylyloxypropyloxy)benzoesäure-4-fluoranilid;
4-(3-Methacrylyloxypropyloxy)benzoesäure-4-chloranilid;
4-(3-Methacrylyloxypropyloxy)benzoesäure-4-bromanilid;
4-(3-Methacrylyloxypropyloxy)benzoesäure-4-cyanoanilid;
4-(3-Methacrylyloxypropyloxy)benzoesäure-4-nitroanilid, Smp. 128,9-131,8 ° C;
4-(3-Methacrylyloxypropyloxy)benzoesäure-N-(4′-cyano-4-biphenylyl)amid;
4-(4-Acrylyloxybutyloxy)benzoesäure-4-methoxyanilid;
4-(4-Acrylyloxybutyloxy)benzoesäure-4-fluoranilid;
4-(4-Acrylyloxybutyloxy)benzoesäure-4-chloranilid;
4-(4-Acrylyloxybutyloxy)benzoesäure-4-bromanilid;
4-(4-Acrylyloxybutyloxy)benzoesäure-4-cyanoanilid;
4-(4-Acrylyloxybutyloxy)benzoesäure-N-(4′-cyano-4-biphenylyl)amid;
4-(4-Methacrylyloxybutyloxy)benzoesäure-4-methoxyanilid;
4-(4-Methacrylyloxybutyloxy)benzoesäure-4-fluoranilid;
4-(4-Methacrylyloxybutyloxy)benzoesäure-4-chloranilid;
4-(4-Methacrylyloxybutyloxy)benzoesäure-4-bromanilid;
4-(4-Methacrylyloxybutyloxy)benzoesäure-4-cyanoanilid;
4-(4-Methacrylyloxybutyloxy)benzoesäure-N-(4′-cyano-4-biphenylyl)amid;
4-(5-Acrylyloxypentyloxy)benzoesäure-4-methoxyanilid;
4-(5-Acrylyloxypentyloxy)benzoesäure-4-fluoranilid;
4-(5-Acrylyloxypentyloxy)benzoesäure-4-chloranilid;
4-(5-Acrylyloxypentyloxy)benzoesäure-4-bromanilid;
4-(5-Acrylyloxypentyloxy)benzoesäure-4-cyanoanilid;
4-(5-Acrylyloxypentyloxy)benzoesäure-N-(4′-cyano-4-biphenylyl)amid;
4-(5-Methacrylyloxypentyloxy)benzoesäure-4-methoxyanilid;
4-(5-Methacrylyloxypentyloxy)benzoesäure-4-fluoranilid;
4-(5-Methacrylyloxypentyloxy)benzoesäure-4-chloranilid;
4-(5-Methacrylyloxypentyloxy)benzoesäure-4-bromanilid;
4-(5-Methacrylyloxypentyloxy)benzoesäure-4-cyanoanilid;
4-(5-Methacrylyloxypentyloxy)benzoesäure-N-(4′-cyano-4-biphenylyl)amid;
4-(6-Acrylyloxyhexyloxy)benzoesäure-anilid;
4-(6-Acrylyloxyhexyloxy)benzoesäure-4-methylanilid;
4-(6-Acrylyloxyhexyloxy)benzoesäure-4-pentylanilid;
4-(6-Acrylyloxyhexyloxy)benzoesäure-4-butyloxyanilid;
4-(6-Acrylyloxyhexyloxy)benzoesäure-4-fluoranilid, Smp. 120,9 ° C;
4-(6-Acrylyloxyhexyloxy)benzoesäure-4-chloranilid, Smp. 149,6 ° C;
4-(6-Acrylyloxyhexyloxy)benzoesäure-4-bromanilid, Smp. 163,3 ° C;
4-(6-Acrylyloxyhexyloxy)benzoesäure-4-cyanoanilid, Smp. 124,3 ° C;
4-(6-Acrylyloxyhexyloxy)benzoesäure-4-nitroanilid;
4-(6-Acrylyloxyhexyloxy)benzoesäure-N-(4′-methoxy-4-biphenylyl)amid;
4-(6-Acrylyloxyhexyloxy)benzoesäure-N-(4′-fluor-4-biphenylyl)amid;
4-(6-Acrylyloxyhexyloxy)benzoesäure-N-(4′-cyano-4-biphenylyl)amid, Smp. (C-N) 174,2 ° C, Klp. (N-I) 211,4 ° C;
4-(6-Methacrylyloxyhexyloxy)benzoesäure-anilid;
4-(6-Methacrylyloxyhexyloxy)benzoesäure-4-methylanilid;
4-(6-Methacrylyloxyhexyloxy)benzoesäure-4-pentylanilid;
4-(6-Methacrylyloxyhexyloxy)benzoesäure-4-methoxyanilid, Smp. 135,5 ° C;
4-(6-Methacrylyloxyhexyloxy)benzoesäure-4-butyloxyanilid;
4-(6-Methacrylyloxyhexyloxy)benzoesäure-4-fluoranilid, Smp. 119,8 ° C;
4-(6-Methacrylyloxyhexyloxy)benzoesäure-4-chloranilid, Smp. 146,6 ° C;
4-(6-Methacrylyloxyhexyloxy)benzoesäure-4-bromanilid, Smp. 159,8 ° C;
4-(6-Methacrylyloxyhexyloxy)benzoesäure-4-cyanoanilid, Smp. 131,7 ° C;
4-(6-Methacrylyloxyhexyloxy)benzoesäure-4-nitroanilid, Smp. 136,5-138,5 ° C;
4-(6-Methacrylyloxyhexyloxy)benzoesäure-N-(4′-methoxy-4-biphenylyl)amid;
4-(6-Methacrylyloxyhexyloxy)benzoesäure-N-(4′-fluor-4-biphenylyl)amid;
4-(6-Methacrylyloxyhexyloxy)benzoesäure-N-(4′-cyano-4-biphenylyl)amid, Smp. (C-N) 130,0 ° C, Klp. (N-I) 181,4 ° C;

4-(6-Methacrylyloxyhexyloxy)benzoesäure-N-(5-nitro-2-pyridyl)amid, Smp. 117-119 °C;
4-(7-Acrylyloxyheptyloxy)benzoesäure-4-methoxyanilid;
4-(7-Acrylyloxyheptyloxy)benzoesäure-4-fluoranilid;
4-(7-Acrylyloxyheptyloxy)benzoesäure-4-chloranilid;
4-(7-Acrylyloxyheptyloxy)benzoesäure-4-bromanilid;
4-(7-Acrylyloxyheptyloxy)benzoesäure-4-cyanoanilid;
4-(7-Acrylyloxyheptyloxy)benzoesäure-N-(4′-cyano-4-biphenylyl)amid;
4-(7-Methacrylyloxyheptyloxy)benzoesäure-4-methoxyanilid;
4-(7-Methacrylyloxyheptyloxy)benzoesäure-4-fluoranilid;
4-(7-Methacrylyloxyheptyloxy)benzoesäure-4-chloranilid;
4-(7-Methacrylyloxyheptyloxy)benzoesäure-4-bromanilid;
4-(7-Methacrylyloxyheptyloxy)benzoesäure-4-cyanoanilid;
4-(7-Methacrylyloxyheptyloxy)benzoesäure-N-(4′-cyano-4-biphenylyl)amid;
4-(8-Acrylyloxyoctyloxy)benzoesäure-4-methoxyanilid;
4-(8-Acrylyloxyoctyloxy)benzoesäure-4-fluoranilid;
4-(8-Acrylyloxyoctyloxy)benzoesäure-4-chloranilid;
4-(8-Acrylyloxyoctyloxy)benzoesäure-4-bromanilid;
4-(8-Acrylyloxyoctyloxy)benzoesäure-N-(4′-cyano-4-biphenylyl)amid;
4-(8-Methacrylyloxyoctyloxy)benzoesäure-4-methoxyanilid;
4-(8-Methacrylyloxyoctyloxy)benzoesäure-4-fluoranilid;
4-(8-Methacrylyloxyoctyloxy)benzoesäure-4-chloranilid;
4-(8-Methacrylyloxyoctyloxy)benzoesäure-4-bromanilid;
4-(8-Methacrylyloxyoctyloxy)benzoesäure-4-cyanoanilid;
4-(8-Methacrylyloxyoctyloxy)benzoesäure-4-nitroanilid;
4-(8-Methacrylyloxyoctyloxy)benzoesäure-N-(4′-cyano-4-biphenylyl)amid;
4-(9-Methacrylyloxynonyloxy)benzoesäure-4-nitroanilid;
4-(10-Methacrylyloxydecyloxy)benzoesäure-4-nitroanilid;
4-(11-Methacrylyloxyundecyloxy)benzoesäure-4-nitroanilid, Smp. 127-132 °C.

Beispiel 3

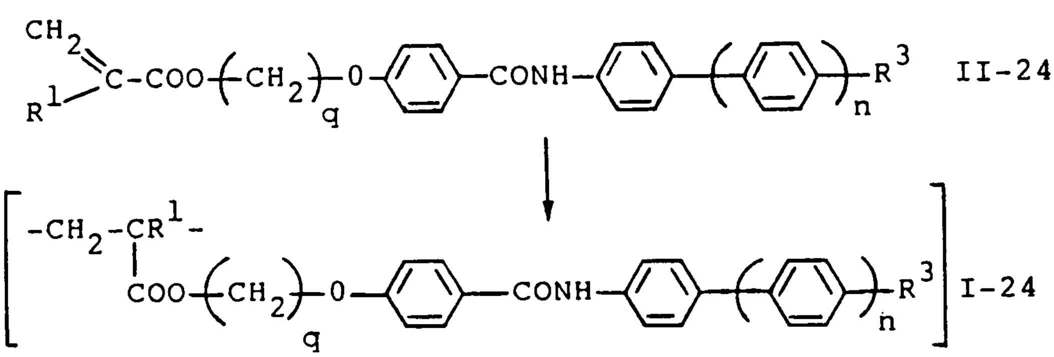

0,5 g Amid der Formel II-24 und 5 mg Azoisobutyronitril wurden in 5,9 ml Dimethylformamid gelöst. Die Lösung wurde zweimal evakuiert und danach jeweils mit Stickstoff (99,999%) begast. Nach erneutem Evakuieren wurde die Lösung auf 60 °C erwärmt. Die Reaktionszeit betrug 18 Stunden im Falle der Acrylate ($R^1$ = H) bzw. 24 Stunden im Falle der Methacrylate ($R^1$ = $CH_3$). Anschliessend wurde das Reaktionsgemisch in 500 ml Methanol gegossen. Das ausgefallende Polymer wurde abfiltriert und in 20 ml Dimethylformamid gelöst. Diese Lösung wurde durch ein 3 µm-Filter filtriert und in 500 ml auf -78 °C gekühltes Methanol getropft. Das Gemisch wurde unter Erwärmen auf Raumtemperatur 5 Stunden gerührt. Anschliessend wurde das ausgefallene Homopolymer abfiltriert.

Die verwendeten Edukte der Formel II-24, die erhaltenen Homopolymere mit einer monomeren Einheit der Formel I-24 sowie der Polymerisationsgrad und die Phasenübergangstemperaturen der Homopolymere sind in Tabelle 1 zusammengestellt. Die Zahlenmittel $M_n$ der Molekulargewichte und die Gewichtsmittel $M_w$ der Molekulargewichte wurden durch Gelpermeationschromatographie auf Ultrastyragel-Säulen der Firma Waters mit Dimethylformamid (1 ml/Minute) und Lithiumbromid (0,02 Mol/l) als mobile Phase und unter

Verwendung eines Brechungsindexdetektors gemessen. Die angegebenen Zahlenwerte sind relative Werte bezogen auf unter gleichen Bedingungen gemessene Polystyrolstandards. $M_w/M_n$ ist ein Mass für die Breite der Molekulargewichtsverteilung. Die Phasenübergangstemperaturen wurden polarisationsmikroskopisch und mit Differential-Thermoanalyse bestimmt; die angegebenen Werte sind Mittelwerte.

Tabelle 1

| Edukt bzw. Product | | | | $M_n$ (g/Mol) | $M_w/M_n$ | Phasenübergänge (°C) |
|---|---|---|---|---|---|---|
| $R^1$ | q | n | $R^3$ | | | |
| H | 6 | 0 | $-OCH_3$ | 27000 | 1,88 | G. 54. S. 130. I |
| H | 6 | 0 | -F | 35000 | 1,24 | C. 106. S. 139. I |
| H | 6 | 0 | -Cl | 31100 | 1,13 | C. 163. S. 189. I |
| H | 6 | 0 | -Br | 17200 | 1,55 | C. 168. I |
| H | 6 | 0 | -CN | 38800 | 1,26 | C. 91. S. 142. I |
| $CH_3$ | 6 | 0 | $-OCH_3$ | 52800 | 3,40 | G. 74. S. 127. I |
| $CH_3$ | 6 | 0 | -F | 93900 | 1,67 | C. 118. I |
| $CH_3$ | 6 | 0 | -Cl | 118000 | 2,20 | C. 142. S. 177. I |
| $CH_3$ | 6 | 0 | -Br | 28400 | 2,03 | C. 177. I |
| $CH_3$ | 6 | 0 | -CN | | | C. 80. S. 117. I |
| $CH_3$ | 6 | 1 | -CN | 53600 | 2,31 | C. 153. S. 325. I |

In analoger Weise können die folgenden Monomere zum Homopolymer polymerisiert werden:
4-(3-Methacrylyloxypropyloxy)benzoesäure-4-nitroanilid;
4-(6-Methacrylyloxyhexyloxy)benzoesäure-4-nitroanilid;
4-(11-Methacrylyloxyundecyloxy)benzoesäure-4-nitroanilid;
4-(6-Methacrylyloxyhexyloxy)benzoesäure-N-(5-nitro-2-pyridyl)amid.

## Beispiel 4

250 mg 4-(6-Methacrylyloxyhexyloxy)benzoesäure-4-nitroanilid, 250 mg 4-Nitro-4′-(6-methacrylyloxyhexyloxy)azobenzol und 5 mg Azoisobutyronitril wurden in 5,9 ml Dimethylformamid gelöst. Die Lösung wurde zweimal evakuiert und danach jeweils mit Stickstoff (99,999%) begast. Nach erneutem Evakuieren wurde die Lösung 24 Stunden auf 60°C erwärmt. Anschliessend wurde das Reaktionsgemisch in 500 ml Methanol gegossen. Das ausgefallene Polymer wurde abfiltriert und in 20 ml Dimethylformamid gelöst. Diese Lösung wurde durch ein 3 µm-Filter filtriert und in 500 ml auf -78°C gekühltes Methanol getropft. Das Gemisch wurde unter Erwärmen auf Raumtemperatur 5 Stunden gerührt. Anschliessend wurde das ausgefallene Produkt abfiltriert. Hierbei wurden 330 mg Copolymer mit Glasübergangstemperatur (G-N) 75°C und Klp. (N-I) 125°C erhalten.

In analoger Weise werden die Copolymere der folgenden Monomere (Gewichtsverhältnis jeweils 1:1) hergestellt:

4-(6-Methacrylyloxyhexyloxy)benzoesäure-4-methoxyanilid und 4-Nitro-4′-(6-methacrylyloxyhexyloxy)-azobenzol;

4-(6-Methacrylyloxyhexyloxy)benzoesäure-4-cyanoanilid und 4-Nitro-4′-(6-methacrylyloxyhexyloxy)-azobenzol;

4-(3-Methacrylyloxypropyloxy)benzoesäure-4-nitroanilid und 4-Nitro-4′-(3-methacrylyloxypropyloxy)-azobenzol;

4-(11-Methacrylyloxyundecyloxy)benzoesäure-4-nitroanilid und 4-Nitro-4′-(11-Methacrylyloxyundecyloxy)azobenzol;

**Patentansprüche**

1. Polymer, dadurch gekennzeichnet, dass es als monomere Einheit eine Gruppe der allgemeinen Formel

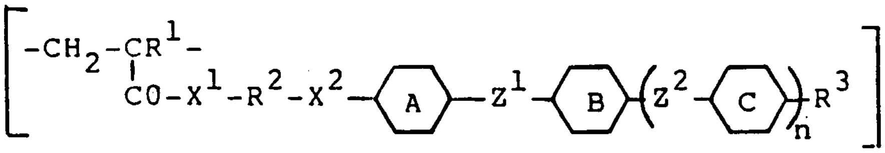 I

worin $R^1$ Wasserstoff, Methyl, Aethyl, Fluor, Chlor, Brom, Cyano oder Phenyl darstellt; $X^1$ Sauerstoff, Schwefel, -NH- oder $-N(CH_3)-$ bezeichnet; $R^2$ Alkylen mit 3-15 Kohlenstoffatomen bedeutet, in welchem gegebenenfalls eine nicht endständige Methylengruppe durch Sauerstoff oder Schwefel ersetzt ist; $X^2$ eine einfache Kovalenzbindung, Sauerstoff oder Schwefel bezeichnet; die Ringe A und B unabhängig voneinander unsubstituiertes oder mit Halogen, Methyl, Methoxy und/oder Cyano substituiertes 1,4-Phenylen darstellen, in welchem gegebenenfalls eine oder zwei CH-Gruppen durch Stickstoff ersetzt sind; Ring C unsubstituiertes oder mit Halogen, Methyl, Methoxy und/oder Cyano substituiertes 1,4-Phenylen, in welchem gegebenenfalls eine oder zwei CH-Gruppen durch Stickstoff ersetzt sind, oder trans-1,4-Cyclohexylen darstellt; n für die Zahl 0 und $Z^1$ für -CONH- oder -NHCO- stehen; oder n für die Zahl 1 steht, eine der Gruppen $Z^1$ und $Z^2$ -CONH- oder -NHCO- darstellt und die andere der Gruppen $Z^1$ und $Z^2$ eine einfache Kovalenzbindung, $-CH_2CH_2-$, $-CH_2O-$, $-OCH_2-$, -N=N-, -CONH- oder -NHCO- bezeichnet; und $R^3$ Wasserstoff, Halogen, Cyano, Nitro oder eine Alkylgruppe bedeutet, in welcher gegebenenfalls eine oder zwei nicht benachbarte Methylengruppen durch Sauerstoff und/oder Schwefel ersetzt sind,
aufweist.

2. Polymer nach Anspruch 1, dadurch gekennzeichnet, dass $R^1$ Wasserstoff oder Methyl darstellt, $X^1$ Sauerstoff bezeichnet, und $X^2$ eine einfache Kovalenzbindung oder Sauerstoff bedeutet.

3. Polymer nach Anspruch 1 oder 2, dadurch gekennzeichnet, dass $R^2$ Alkylen mit 3-11 Kohlenstoffatomen, vorzugsweise Polymethylen bedeutet.

4. Polymer nach einem der Ansprüche 1 bis 3, dadurch gekennzeichnet, dass Ring A 1,4-Phenylen oder mit Halogen, Methyl, Methoxy und/oder Cyano substituiertes 1,4-Phenylen darstellt, Ring B Pyridin-2,5-diyl, Pyrimidin-2,5-diyl, Pyrazin-2,5-diyl, Pyridazin-2,5-diyl, 1,4-Phenylen oder mit Halogen, Methyl, Methoxy und/oder Cyano substituiertes 1,4-Phenylen bezeichnet, und Ring C trans-1,4-Cyclohexylen, 1,4-Phenylen oder mit Halogen, Methyl, Methoxy und/oder Cyano substituiertes 1,4-Phenylen bedeutet.

5. Polymer nach einem der Ansprüche 1 bis 4, dadurch gekennzeichnet, dass $Z^2$ eine einfache Kovalenzbindung, $-CH_2CH_2-$, $-CH_2O-$, $-OCH_2-$, -N=N-, -CONH- oder -NHCO-bezeichnet, und $Z^1$ -CONH- oder -NHCO-, vorzugsweise -CONH- darstellt.

6. Polymer nach einem der Ansprüche 1 bis 5, dadurch gekennzeichnet, dass es als monomere Einheit eine Gruppe der allgemeinen Formel

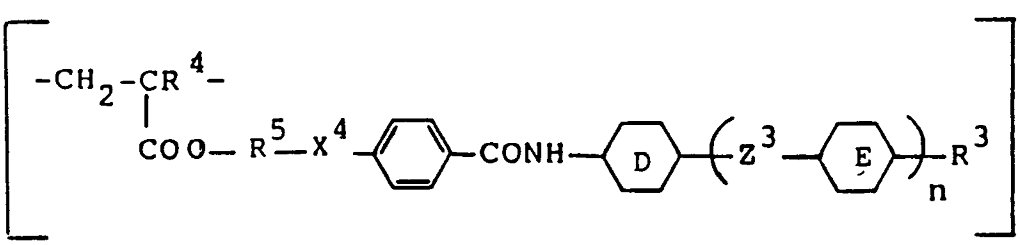 I-7

worin $R^4$ Wasserstoff oder Methyl darstellt; $R^5$ Polymethylen mit 3-11 Kohlenstoffatomen bedeutet; $X^4$ eine einfache Kovalenzbindung oder Sauerstoff bezeichnet; Ring D 1,4-Phenylen, Pyridin-2,5-diyl,

Pyrimidin-2,5-diyl, Pyrazin-2,5-diyl oder Pyridazin-3,6-diyl darstellt; Ring E 1,4-Phenylen oder trans-1,4-Cyclohexylen darstellt; $Z^3$ eine einfache Kovalenzbindung, $-CH_2CH_2-$, $-CH_2O-$, $-OCH_2-$, -N = N-, -CONH- oder -NHCO- bezeichnet; und n und $R^3$ die in Anspruch 1 gegebenen Bedeutungen haben, aufweist.

**7.** Polymer nach einem der Ansprüche 1 bis 6, dadurch gekennzeichnet, dass $R^3$ Fluor, Chlor, Brom, Cyano, Nitro, $C_1$-$C_{12}$-Alkyl oder $C_1$-$C_{12}$-Alkoxy bedeutet.

**8.** Polymer nach einem der Ansprüche 1 bis 7, dadurch gekennzeichnet, dass das Zahlenmittel des Molekulargewichtes gemessen durch Gelpermeationschromatographie mit Dimethylformamid und Polystyrolstandards 5000-2000000 g/Mol, vorzugsweise 10000-200000 beträgt.

**9.** Copolymer nach einem der Ansprüche 1 bis 8, dadurch gekennzeichnet, dass der Massenbruch an einer oder mehreren monomeren Einheiten der Formel I mindestens 30%, vorzugsweise mindestens 50% beträgt.

**10.** Verbindungen der allgemeinen Formel

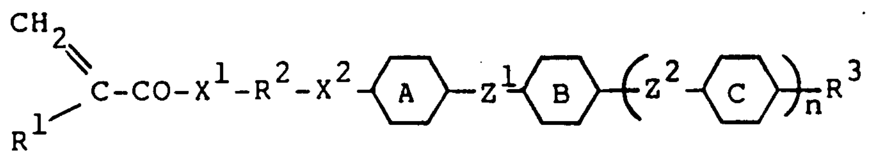

II

worin $R^1$ Wasserstoff, Methyl, Aethyl, Fluor, Chlor, Brom, Cyano oder Phenyl darstellt; $X^1$ Sauerstoff, Schwefel, -NH- oder $-N(CH_3)-$ bezeichnet; $R^2$ Alkylen mit 3-15 Kohlenstoffatomen bedeutet, in welchem gegebenenfalls eine nicht endständige Methylengruppe durch Sauerstoff oder Schwefel ersetzt ist; $X^2$ eine einfache Kovalenzbindung, Sauerstoff oder Schwefel bezeichnet; die Ringe A und B unabhängig voneinander unsubstituiertes oder mit Halogen, Methyl, Methoxy und/oder Cyano substituiertes 1,4-Phenylen darstellen, in welchem gegebenenfalls eine oder zwei CH-Gruppen durch Stickstoff ersetzt sind; Ring C unsubstituiertes oder mit Halogen, Methyl, Methoxy und/oder Cyano substituiertes 1,4-Phenylen, in welchem gegebenenfalls eine oder zwei CH-Gruppen durch Stickstoff ersetzt sind, oder trans-1,4-Cyclohexylen darstellt; n für die Zahl 0 und $Z^1$ für -CONH- oder -NHCO- stehen: oder n für die Zahl 1 steht, eine der Gruppen $Z^1$ und $Z^2$ -CONH- oder -NHCO- darstellt und die andere der Gruppen $Z^1$ und $Z^2$ eine einfache Kovalenzbindung, $-CH_2CH_2-$, $-CH_2O-$, $-OCH_2-$, -N = N-, -CONH- oder -NHCO- bezeichnet; und $R^3$ Wasserstoff, Halogen, Cyano, Nitro oder eine Alkylgruppe bedeutet, in welcher gegebenenfalls eine oder zwei nicht benachbarte Methylengruppen durch Sauerstoff und/oder Schwefel ersetzt sind.

**11.** Verfahren zur Herstellung der Polymere gemäss Anspruch 1, dadurch gekennzeichnet, dass man ein Monomer der in Anspruch 10 definierten Formel II allein oder zusammen mit Comonomeren polymerisiert.

**12.** Verwendung des Polymers gemäss einem der Ansprüche 1 bis 9 in der Optik, insbesondere in der integrierten Optik, in der Optoelektronik und/oder zur Informationsspeicherung.

**13.** Verwendung des Polymers gemäss einem der Ansprüche 1 bis 9 zur Trennung von Stoffgemischen, insbesondere für Trennmembranen zur Trennung von Gasgemischen oder als stationäre Phase in der Gaschromatograhie.

## Claims

1. A polymer, characterized in that it contains as the monomeric unit a group of the general formula

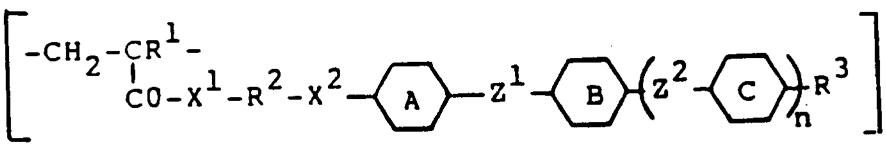

I

wherein $R^1$ represents hydrogen, methyl, ethyl, fluorine, chlorine, bromine, cyano or phenyl; $X^1$ denotes oxygen, sulphur, -NH- or -N($CH_3$)-; $R^2$ signifies alkylene with 3-15 carbon atoms in which optionally a non-terminal methylene group is replaced by oxygen or sulphur; $X^2$ denotes a single covalent bond, oxygen or sulphur; rings A and B each independently represent 1,4-phenylene which is unsubstituted or substituted with halogen, methyl, methoxy and/or cyano and in which optionally one CH group or two CH groups is/are replaced by nitrogen; ring C represents 1,4-phenylene which is unsubstituted or substituted with halogen, methyl, methoxy and/or cyano and in which optionally one CH group or two CH groups is/are replaced by nitrogen or represents trans-1,4-cyclohexylene; n stands for the number 0 and $Z^1$ stands for -CONH- or -NHCO-; or n stands for the number 1, one of the groups $Z^1$ and $Z^2$ represents -CONH- or -NHCO- and the other of the groups $Z^1$ and $Z^2$ denotes a single covalent bond, $-CH_2CH_2-$, $-CH_2O-$, $-OCH_2-$, -N=N-, -CONH- or -NHCO-; and $R^3$ signifies hydrogen, halogen, cyano, nitro or an alkyl group in which optionally one methylene group or two non-adjacent methylene groups is/are replaced by oxygen and/or sulphur.

2. A polymer according to claim 1, characterized in that $R^1$ represents hydrogen or methyl, $X^1$ denotes that $R^1$ represents hydrogen or methyl, $X^1$ denotes oxygen and $X^2$ signifies a single covalent bond or oxygen.

3. A polymer according to claim 1 or 2, characterized in that $R^2$ signifies alkylene with 3-11 carbon atoms, preferably polymethylene.

4. A polymer according to any one of claims 1 to 3, characterized in that ring A represents 1,4-phenylene or 1,4-phenylene which is substituted with halogen, methyl, methoxy and/or cyano, ring B denotes pyridine-2,5-diyl, pyrimidine-2,5-diyl, pyrazine-2,5-diyl, pyridazine-2,5-diyl, 1,4-phenylene or 1,4-phenylene which is substituted with halogen, methyl, methoxy and/or cyano and ring C signifies trans-1,4-cyclohexylene, 1,4-phenylene or 1,4-phenylene which is substituted with halogen, methyl, methoxy and/or cyano.

5. A polymer according to any one of claims 1 to 4, characterized in that $Z^2$ denotes a single covalent bond, $-CH_2CH_2-$, $-CH_2-O-$, $-OCH_2-$, -N=N-, -CONH- or -NHCO- and $Z^1$ represents -CONH or -NHCO-, preferably -CONH-.

6. A polymer according to any one of claims 1 to 5, characterized in that it has as the monomeric unit a group of the general formula

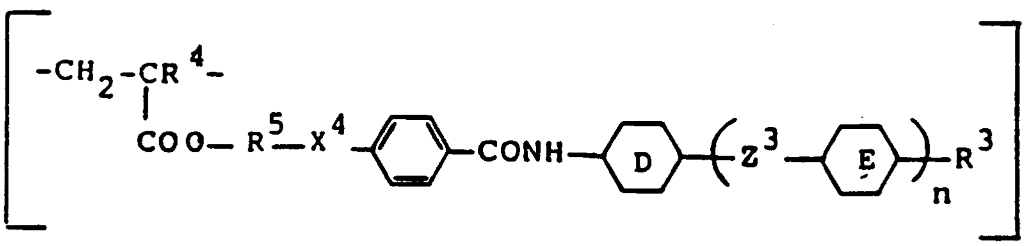

I-7

wherein $R^4$ represents hydrogen or methyl; $R^5$ signifies polymethylene with 3-11 carbon atoms; $X^4$ denotes a single covalent bond or oxygen; ring D represents 1,4-phenylene, pyridine-2,5-diyl,

pyrimidine-2,5-diyl, pyrazine-2,5-diyl or pyridazine-3,6-diyl; ring E represents 1,4-phenylene or trans-1,4-cyclohexylene; $Z^3$ denotes a single covalent bond, $-CH_2CH_2-$, $-CH_2O-$, $-OCH_2-$, -N=N-, -CONH- or -NHCO-; and n and $R^3$ have the significances given in claim 1.

**7.** A polymer according to any one of claims 1 to 6, characterized in that $R^3$ signifies fluorine, chlorine, bromine, cyano, nitro, $C_1$-$C_{12}$-alkyl or $C_1$-$C_{12}$-alkoxy.

**8.** A polymer according to any one of claims 1 to 7, characterized in that the number average of the molecular weight measured by gel permeation chromatography with dimethylformamide and polystyrene standards amounts to 5000-2000000 g/mol, preferably 10000-200000.

**9.** A copolymer according to any one of claims 1 to 8, characterized in that the fraction of one or more monomeric units of formula I amounts to at least 30%, preferably at least 50%.

**10.** Compounds of the general formula

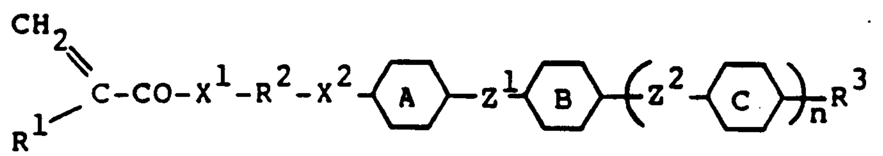

II

wherein $R^1$ represents hydrogen, methyl, ethyl, fluorine, chlorine, bromine, cyano or phenyl; $X^1$ denotes oxygen, sulphur, -NH- or $-N(CH_3)-$; $R^2$ signifies alkylene with 3-15 carbon atoms in which optionally a non-terminal methylene group is replaced by oxygen or sulphur: $X^2$ denotes a single covalent bond, oxygen or sulphur; rings A and B each independently represent 1,4-phenylene which is unsubstituted or substituted with halogen, methyl, methoxy and/or cyano and in which optionally one CH group or two CH groups is/are replaced by nitrogen; ring C represents 1,4-phenylene which is unsubstituted or substituted with halogen, methyl, methoxy and/or cyano and in which optionally one CH group or two CH groups is/are replaced by nitrogen or represents trans-1,4-cyclohexylene; n stands for the number 0 and $Z^1$ stands for -CONH- or -NHCO-; or n stands for the number 1, one of the groups $Z^1$ and $Z^2$ represents -CONH- or -NHCO- and the other of the groups $Z^1$ and $Z^2$ denotes a single covalent bond, $-CH_2CH_2-$, $-CH_2O-$, $-OCH_2-$, -N=N-, -CONH- or -NHCO-; and $R^3$ signifies hydrogen, halogen, cyano, nitro or an alkyl group in which optionally one methylene group or two non-adjacent methylene groups is/are replaced by oxygen and/or sulphur.

**11.** A process for the manufacture of the polymers in accordance with claim 1, characterized by polymerizing a monomer of formula II defined in claim 10 alone or together with comonomers.

**12.** The use of the polymer in accordance with any one of claims 1 to 9 in optics, especially in integrated optics, in optoelectronics and/or for information storage.

**13.** The use of the polymer in accordance with any one of claims 1 to 9 for the separation of mixtures of substances, especially for separating membranes for the separation of mixtures of gases or as a stationary phase in gas chromatography.

**Revendications**

**1.** Polymère caractérisé en ce qu'il présente, comme unité monomère, un groupe de formule générale

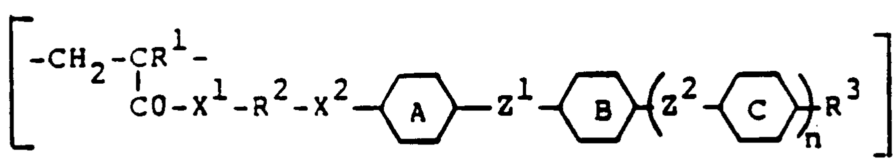

I

où $R^1$ représente l'hydrogène, le méthyle, l'éthyle, le fluor, le chlore, le brome, le cyano ou le phényle; $X^1$ représente l'oxygène, le soufre, -NH- ou -N($CH_3$)-; $R^2$ représente un alkylène ayant 3 à 15 atomes de carbone, dans lequel un groupe méthylène non terminal est éventuellement remplacé par l'oxygène ou le soufre; $X^2$ représente une liaison covalente simple, l'oxygène ou le soufre; les noyaux A et B représentent indépendamment l'un de l'autre le 1,4-phénylène non substitué ou substitué par un halogène, le méthyle, le méthoxy et/ou le cyano, dans lequel un ou deux groupes CH sont éventuellement remplacés par l'azote; le noyau C représente le 1,4-phénylène non substitué ou substitué par un halogène, le méthyle, le méthoxy et/ou le cyano, dans lequel un ou deux groupes CH sont éventuellement remplacés par l'azote ou le trans-1,4-cyclohexylène; n est égal à 0 et $Z^1$ représente -CONH- ou -NHCO-; ou n est égal à 1, l'un des groupes $Z^1$ et $Z^2$ représente -CONH- ou -NHCO- et l'autre des groupes $Z^1$ et $Z^2$ représente une liaison covalente simple, $-CH_2CH_2-$, $-CH_2O-$, $-OCH_2-$, -N=N-, -CONH- ou -NHCO-; et $R^3$ représente l'hydrogène, un halogène, le cyano, le nitro ou un groupe alkyle dans lequel un ou deux groupes méthylènes non contigus sont éventuellement remplacés par l'oxygène et/ou le soufre.

2. Polymère selon la revendication 1, caractérisé en ce que $R^1$ représente l'hydrogène ou le méthyle, $X^1$ représente l'oxygène et $X^2$ représente une liaison covalente simple ou l'oxygène.

3. Polymère selon la revendication 1 ou 2, caractérisé en ce que $R^2$ représente un alkylène ayant 3 à 11 atomes de carbone, de préférence, un polyméthylène.

4. Polymère selon l'une des revendications 1 à 3, caractérisé en ce que le noyau A représente le 1,4-phénylène ou le 1,4-phénylène substitué par un halogène, le méthyle, le méthoxy et/ou le cyano, le noyau B représente le pyridin-2,5-diyle, le pyrimidin-2,5-diyle, le pyrazin-2,5-diyle, le pyridazin-2,5-diyle, le 1,4-phénylène ou le 1,4-phénylène substitué par un halogène, le méthyle, le méthoxy et/ou le cyano et le noyau C représente le trans-1,4-cyclohexylène, le 1,4-phénylène ou le 1,4-phénylène substitué par un halogène, le méthyle, le méthoxy et/ou le cyano.

5. Polymère selon l'une des revendications 1 à 4, caractérisé en ce que $Z^2$ représente une liaison covalente simple, $-CH_2CH_2-$, $-CH_2O-$, $-OCH_2-$, -N=N-, -CONH- ou -NHCO- et $Z^1$ représente -CONH- ou -NHCO-, de préférence, -CONH-.

6. Polymère selon l'une des revendications 1 à 5, caractérisé en ce qu'il présente, comme unité monomère, un groupe de formule générale

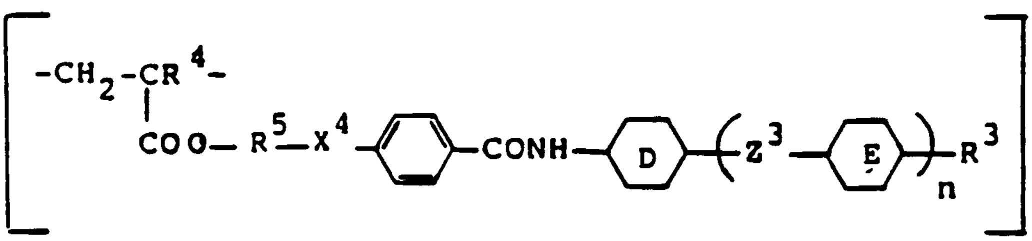

I-7

où $R^4$ représente l'hydrogène ou le méthyle; $R^5$ représente un polyméthylène ayant 3 à 11 atomes de carbone; $X^4$ représente une liaison covalente simple ou l'oxygène; le noyau D représente le 1,4-phénylène, le pyridin-2,5-diyle, le pyrimidin-2,5-diyle, le pyrazin-2,5-diyle ou le pyridazin-3,6-diyle; le noyau E représente le 1,4-phénylène ou le trans-1,4-cyclohexylène; $Z^3$ représente une liaison covalente simple, $-CH_2CH_2-$, $-CH_2O-$, $-OCH_2-$, -N=N-, -CONH- ou -NHCO-; et n et $R^3$ ont les significations données dans la revendication 1.

7. Polymère selon l'une des revendications 1 à 6, caractérisé en ce que $R^3$ représente le fluor, le chlore, le brome, le cyano, le nitro, un alkyle en $C_1$-$C_{12}$ ou un alcoxy en $C_1$ -$C_{12}$.

8. Polymère selon l'une des revendications 1 à 7, caractérisé en ce que la masse moléculaire moyenne en nombre, déterminée par chromatographie de perméation sur gel avec le diméthylformamide et le standard polystyrène est comprise entre 5 000 et 2 000 000 g/mole, de préférence, entre 10 000 et 200

000.

**9.** Copolymère selon l'une des revendications 1 à 8, caractérisé en ce que la fraction massique en une ou plusieurs unités monomères de formule I est d'au moins 30 %, de préférence, d'au moins 50 %.

**10.** Composés de formule générale

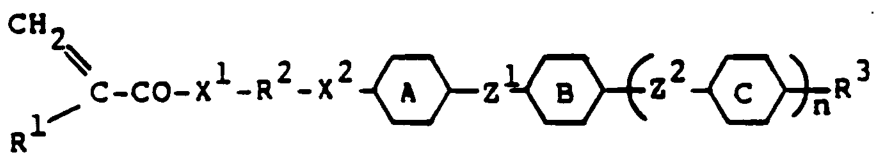

II

où $R^1$ représente l'hydrogène, le méthyle, l'éthyle, le fluor, le chlore, le brome, le cyano ou le phényle; $X^1$ représente l'oxygène, le soufre, -NH- ou $-N(CH_3)-$; $R^2$ représente un alkylene ayant 3 à 15 atomes de carbone, dans lequel un groupe méthylène non terminal est éventuellement remplacé par l'oxygène ou le soufre; $X^2$ représente une liaison covalente simple, l'oxygène ou le soufre; les noyaux A et B représentent indépendamment l'un de l'autre le 1,4-phénylène non substitué ou substitué par un halogène, le méthyle, le méthoxy et/ou le cyano, dans lequel un ou deux groupes CH sont éventuellement remplacés par l'azote; le noyau C représente le 1,4-phénylène non substitué ou substitué par un halogène, le méthyle, le méthoxy et/ou le cyano, dans lequel un ou deux groupes CH sont éventuellement remplacés par l'azote ou le trans-1,4-cyclohexylène; n est égal à 0 et $Z^1$ représente -CONH- ou -NHCO-; ou n est égal à 1, l'un des groupes $Z^1$ et $Z^2$ représente -CONH- ou -NHCO- et l'autre des groupes $Z^1$ et $Z^2$ représente une liaison covalente simple, $-CH_2CH_2-$, $-CH_2O-$, $-OCH_2-$, -N=N-, -CONH- ou -NHCO-; et $R^3$ représente l'hydrogène, un halogène, le cyano, le nitro ou un groupe alkyle dans lequel un ou deux groupes méthylène non contigus sont éventuellement remplacés par l'oxygène et/ou le soufre.

**11.** Procédé pour la préparation des polymères selon la revendication 1, caractérisé en ce que l'on polymérise un monomère de formule II défini dans la revendication 10 seul ou en association avec des comonomères.

**12.** Utilisation du polymère selon l'une des revendications 1 à 9 en optique, en particulier en optique intégrée, en opto-électronique et/ou pour la mise en mémoire d'informations.

**13.** Utilisation du polymère selon l'une des revendications 1 à 9 pour la séparation de mélanges de produits, en particulier pour les membranes de séparation pour la séparation des mélanges de gaz ou comme phase stationnaire en chromatographie gazeuse.